# EUROPEAN PATENT APPLICATION

(11) **EP 1 873 756 A1**
(43) Date of publication of application: **02.01.2008**
(21) Application number: 06729522.0
(22) Date of filing: 20.03.2006
(51) Int. Cl.: G11B 5/02, G11B 5/64, G11B 5/65, G11B 5/73, G11B 11/10

(54) **MAGNETIC RECORDING MEDIUM, ITS RECORDING/REPRODUCING METHOD, AND RECORDING/REPRODUCING DEVICE**

(30) Priority: 30.03.2005 JP 2005097397
(71) Applicant: MATSUSHITA ELECTRIC INDUSTRIAL CO., LTD., Osaka 571-8501 (JP)
(72) Inventor: MURAKAMI, Motoyoshi Matsushita Electr.Ind., Chuo-ku, Osaka-shi, Osaka 540-6319 (JP)
(74) Representative: Eisenführ, Speiser & Partner
(86) International application number: PCT/JP2006/305554
(87) International publication number: WO 2006/109446

(57) **Abstract**

Magnetic recording media conventionally require a time-consuming and cost-increasing task of recording servo pits on each individual disk. Disclosed are a magneto-optical recording medium and a recording and reproducing method for the magneto-optical recording medium. The magneto-optical recording medium has the structure in which at least a recording layer magnetized in a direction perpendicular to the plane is formed on a disk substrate, and allows a format signal to be formed thereon by changing the magnetization direction or the magnetic anisotropy of the recording layer or by oxidizing the recording layer to form pits. This structure significantly improves the disk productivity and reduces the disk cost and also enables the magnetic recording medium to have good characteristics including stable servo characteristics.

## Description

### TECHNICAL FIELD

The present invention relates to a magnetic recording medium and recording and reproducing method and apparatus for the magnetic recording medium, or more particularly, to a rewritable magnetic recording medium or a magnetic recording medium on which signals are recorded and reproduced while the temperature of the magnetic recording medium is being raised through light irradiation, and particularly a magnetic recording medium that uses servo signals, and recording and reproducing method and apparatus for such a magnetic recording medium.

### BACKGROUND ART

Optical recording media, such as magnetic recording media and phase-change recording media, are portable recording media that feature high-density recording of large volumes of data. The recent advancement in multimedia technology has raised the necessity to store large volumes of data including large computer files and moving image data. Demand is increasing rapidly for the optical recording media that can store such large volumes of data.
An optical recording medium typically includes a transparent disk substrate, which is made for example of plastic, on which multiple layers including a recording layer are formed. Information is recorded on or erased from the optical recording medium by irradiating the recording medium with laser light. Signals are reproduced from the optical recording medium by irradiating the recording medium with laser light and using the reflected laser light. The recording and erasure and the reproduction are performed while tracking servo using guide grooves or pits and focus servo are being performed.

The maximum recording density of an optical recording medium depends on its optical diffraction limit (up to λ/2NA, where NA is the numeric aperture of its objective lens), which is determined by the wavelength (λ) of laser light from its light source. In recent years, efforts have been made to improve optical recording media toward higher recording densities. For example, double-lens optical systems that use two objective lenses have been proposed and have achieved NA values of 0.8 and higher. When the recording layer of an optical recording medium is irradiated with laser light for recording and reproduction, the laser light for recording and reproduction is conventionally applied through the substrate. Aberration is generated when, for example, the substrate is skewed and not perpendicular to the laser light passing through the substrate. Such aberration is greater as the NA is greater. To prevent the aberration from increasing, the substrate is required to be thinner.

Among optical recording media, conventional magneto-optical recording media mainly employ optical modulation recording. With the optical modulation recording, information is first erased from a recording medium by applying a stationary magnetic field to the recording medium and then information is recorded on the recording medium by applying a stationary magnetic field in a direction opposite to the magnetic direction of the stationary magnetic field used for the erasure. However, optical recording media in recent years employ magnetic field modulation recording, which enables information to be recorded by a single rotation of a recording medium (direct overwrite) and also features precise high-density recording. Such optical recording media employing magnetic field modulation have been commercialized. With the magnetic field modulation recording, a magnetic field applied to a recording medium is modulated according to a recording pattern while the recording medium is being irradiated with laser light. Moreover, magnetic recording media have recently achieved even higher recording densities by combining improvements made to media themselves with technologies such as GMR (giant magneto resistive) heads.

Phase-change recording media, which enable direct overwrite when employing the optical modulation recording and are reproducible using the same optical system as CDs and DVDs, are also attracting attention.
The problem is, however, that guide grooves for tracking guide or servo pits are not formed on magnetic recording media. Signals used for tracking need to be recorded on magnetic recording media using a servo writer.
One technique has been proposed to form servo pits on a magnetic recording medium by magnetically transferring onto the magnetic recording medium (see Patent Document 1).
Patent Document 1: Japanese Unexamined Patent Publication No. H10-40544

However, this technique uses a servo writer to record the tracking signals. This means that the servo signals need to be recorded on each individual recording medium, which is time consuming as well as cost increasing. This technique further has difficulties associated with, for example, magnetic fields used for the transferring and the processing used for the transferring, and fails to form servo information that will endure actual use.
Moreover, if recording media are improved toward higher densities, the recording media will have smaller track pitches accordingly. In this case, the recording media will be affected greatly by the ambient environment including ambient temperature drift. Consequently, the recording media will require stable tracking information to be recorded thereon or stable servo signals to be detected thereon.

### DISCLOSURE OF INVENTION

### TECHNICAL PROBLEM

It is an object of the present invention to provide a recording and reproducing method for a magnetic recording medium that enables format signals, such as servo signals, to be recorded on the magnetic recording medium without using a servo writer, and thereby simplifies recording of format signals and improves the stability of format signals as well as enables the magnetic recording medium to have good characteristics including tracking characteristics and signal characteristics.
It is another object of the present invention to provide a recording and reproducing apparatus for a magnetic recording medium that is applicable to the recording and reproducing method, and a magnetic recording medium on which magnetic recording and reproduction is performed, or a magnetic recording medium on which recording and reproduction is performed while the temperature of a recording layer is being raised through light irradiation.

### TECHNICAL SOLUTION

The present invention provides a recording and reproducing method for a magnetic recording medium. The method includes recording a format signal on the magnetic recording medium and/or detecting a format signal on the magnetic recording medium using at least one probe array that includes a probe arranged to face the magnetic recording medium so as to scan the magnetic recording medium, and recording, reproducing, and/or erasing data on the magnetic recording medium using the at least one probe array.

The present invention further provides a recording and reproducing method for a magnetic recording medium. The method includes arranging a mask that is patterned according to data and/or a format signal on a surface of the magnetic recording medium, and recording a signal on the magnetic recording medium by heating the magnetic recording medium through the mask or by irradiating the magnetic recording medium with light through the mask.

The present invention further provides a recording and reproducing apparatus for a magnetic recording medium that records, reproduces, and erases data and/or a format signal on the magnetic recording medium. The apparatus includes at least one probe array that includes a probe arranged to face the magnetic recording medium so as to scan the magnetic recording medium and a magnetic recording medium on which data and/or a format signal is recorded by changing a magnetization direction of the magnetic recording medium. The probe includes a means for detecting a format signal on the magnetic recording medium, a means for recording data and/or a format signal on the magnetic recording medium, and a means for reproducing data on the magnetic recording medium.

The present invention further provides a recording and reproducing apparatus for a magnetic recording medium that writes a signal to the magnetic recording medium by irradiating the magnetic recording medium through a mask with light that is applied from a light source and heating the magnetic recording medium according to data and/or a format signal. The apparatus includes a magnetic recording medium on which data and/or a format signal is recorded by changing a magnetization direction of the magnetic recording medium, a mask that is patterned according to the data and/or the format signal and is arranged on a surface of the magnetic recording medium, and a light source for irradiating the magnetic recording medium with light through the mask.

The present invention further provides a magnetic recording medium including a substrate and a recording layer that is formed from a magnetic material. A format signal is recorded on the magnetic recording medium by changing a magnetization direction or a magnetic anisotropy of the magnetic recording medium.
The present invention further provides a magnetic recording medium including a substrate and a recording layer that is formed from a magnetic material. A format signal is recorded on the magnetic recording medium using a pit formed with an oxidation film.

### BRIEF DESCRIPTION OF DRAWINGS

FIG. 1 is a cross-sectional view showing the structure of a magnetic recording medium in Embodiment 1 of the present invention;
FIG. 2 is a cross-sectional view showing the structure of a magnetic recording medium in Embodiment 2 of the present invention;
FIG. 3 is a cross-sectional view showing the structure of a magnetic recording medium in Embodiment 3 of the present invention;
FIG. 4 is a cross-sectional view showing the structure of a magnetic recording medium in Embodiment 4 of the present invention;
FIG. 5A is a cross-sectional view showing the structure of a magnetic recording medium in Embodiment 5 of the present invention and its manufacturing method, and FIG. 5B is a perspective view showing the structure of the magnetic recording medium in Embodiment 5 of the present invention and its manufacturing method;
FIG. 6A is a cross-sectional view showing the structure of a magnetic recording medium in Embodiment 6 of the present invention and its manufacturing method, and FIG 6B is a perspective view showing the structure of the magnetic recording medium in Embodiment 6 of the present invention and its manufacturing method;
FIG. 7A is a cross-sectional view showing the structure of a magnetic recording medium in Embodiment 7 of the present invention, and FIG 7B is a perspective view showing the structure of the magnetic recording medium in Embodiment 7 of the present invention and its manufacturing method;
FIG. 8 is a perspective view showing the structure of a magnetic recording medium in Embodiment 8 of the present invention;
FIG. 9 shows the structures of the magnetic recording medium in Embodiment 1 of the present invention and of its recording and reproducing apparatus;
FIG. 10 shows the structures of the magnetic recording medium in Embodiment 2 of the present invention and of its recording and reproducing apparatus;
FIG. 11 shows the structure of a recording apparatus for a magnetic recording medium in an embodiment of the present invention; and

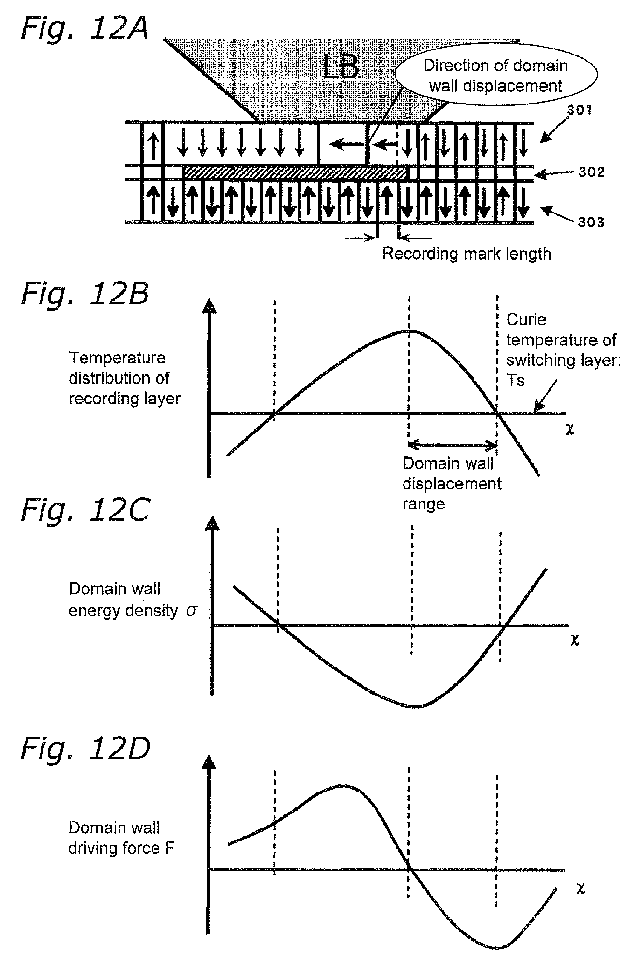

FIG. 12A is a cross-sectional view showing the structure (particularly the direction of magnetization) of a recording layer of the magneto-optical recording medium in each embodiment of the present invention, FIG. 12B is a characteristic diagram showing the distribution of temperatures at positions inside the magneto-optical recording medium during reproduction, FIG. 12C is a characteristic diagram showing the energy density of domain walls of a readout layer of the magneto-optical recording medium, and FIG. 12D is a characteristic diagram showing the force that displaces the domain walls of the readout layer.

### EXPLANATION OF REFERENCE

10, 20, 30, 40, 50, 60, 70, 90, 110, 120 magnetic recording medium (magnetic disk)
11, 21, 31, 41, 51, 61, 71, 91, 101, 111 substrate
12, 22, 32, 141, 52, 62, 72, 92, 102, 112 format signal region
13, 23, 33, 143, 53, 63, 73, 93, 103, 113 data region
14, 24, 34, 44, 54, 64, 74, 94, 106, 116 recording track
16, 26, 36, 46, 56, 78, 96 under layer
17, 27, 37, 47, 57, 67, 79, 97 magnetic layer group
18, 28, 38, 48, 80, 98 protective layer
19, 29, 39, 59, 89, 99 magnetic head
76a, 76b, 77 pit
83, 100, 130, 140 optical head
58, 68, 81 mask
108, 118 probe
109, 119 probe array
201 magnetic disk
202 magnetic head
203 spindle motor
204 optical head
205 laser drive circuit
206 control and detection circuit
207 motor drive circuit
208, 209, 210, 211 optical element

### BEST MODE FOR CARRYING OUT THE INVENTION

The recording and reproducing method for the magnetic recording medium of the present invention detects, records, reproduces, and/or erases information, or more specifically format signals, and data, which is often called "content", using at least one probe array that includes a probe arranged to face the magnetic recording medium so as to scan the magnetic recording medium. The format signals refer to signals other than data signals, or more specifically, signals such as servo signals and address signals containing address information.

The probe is usable either instead of or in addition to a magnetic head and/or an optical head in a recording and reproducing apparatus, which will be described later. It is preferable that the probe is capable of applying a magnetic field and/or heat to the recording medium. For example, it is preferable that the probe has a means for generating a magnetic field (e.g. a coil) and/or a means for heating the magnetic recording medium (e.g. a heater) on its distal end. It is further preferable that the probe (using for example a cantilever or a probe array) is mounted on the recording and reproducing apparatus in a manner that the probe scans the magnetic recording medium or the probe is movable in a radial direction of the magnetic recording medium while the probe is facing a surface of the magnetic recording medium at a predetermined distance from the surface of the magnetic recording medium or while the probe is contacting or tapping the surface of the magnetic recording medium.

In this recording and reproducing apparatus, it is preferable that the format signal is recorded and/or detected or the data is recorded, reproduced, and/or erased by changing a magnetization direction of the magnetic recording medium using a magnetic field that is applied from the probe.

Alternatively, it is preferable that the data is recorded, reproduced, and/or erased or the format signal is recorded and/or detected by changing a magnetization direction or a magnetic anisotropy of the magnetic recording medium while the magnetic recording medium is being heated using the probe. Further, a guard band may be formed by changing a magnetization direction or a magnetic anisotropy of the magnetic recording medium while the magnetic recording medium is being heated using the probe.

Alternatively, the data may be recorded, the format signal may be recorded, or the guard band may be formed by oxidizing the magnetic recording medium while the magnetic recording medium is being heated using the probe.
A plurality of probes may be used to perform erasing on the entire surface of the magnetic recording medium altogether or to perform erasing on the magnetic recording medium in units of appropriate-size regions of the magnetic recording medium.

Another recording and reproducing method of the present invention records a signal on a magnetic recording medium, in place of using a probe, by arranging a mask that is patterned according to data and/or a format signal on a surface of a magnetic recording medium and heating the magnetic recording medium through the mask or irradiating the magnetic recording medium with light through the mask.

As described above, heating changes the magnetic anisotropy of the magnetic recording medium and consequently records the data and/or the format signal on the magnetic recording medium. Further, the same process as this may be used to form a guard band.

It is preferable that the mask has regions that differ from one another in light transmittance or pits or the like according to the data, the format signal, and/or the guard band.
The light source for applying light through the mask should not be limited to any particular light source. However, it is preferable to use, for example, a gas laser, a YAG laser, and a semiconductor laser.

When a recording surface of the magnetic recording medium has concaves and convexes, concaves and convexes formed by grooves, and/or concaves and convexes formed by pits, it is preferable that the grooves and the pits formed on the recording surface are heated simultaneously. Further, it is preferable that the data is recorded, reproduced, and/or erased only on surfaces of the convexes.

The magnetic recording medium may have, on its recording surface, or more specifically on its substrate surface and/or its recording layer surface, concaves and convexes (having for example a predetermined value of a surface roughness Ra, preferably substantially 0.5 nm or greater, and more preferably substantially 10 nm or less, or concaves and convexes corresponding to recording marks, concaves and convexes having a cycle smaller than a cycle of the recording marks, and/or concaves and convexes corresponding to domain walls of the recording marks), concaves and convexes formed by grooves (which are typically called "lands and grooves" and have dimensions of substantially 5 to 500 nm for lands and substantially 5 to 500 nm for grooves), and/or concaves and convexes formed by pits (which are typically holes formed partially in the surface and have for example a diameter of substantially 10 to 200 nm). The recording medium, on which magnetic recording and reproduction is performed by raising the temperature of the recording layer through light irradiation, has such concaves and convexes, or more specifically, the regions of the recording layer that differ from other regions in their surface roughness are pits forming the concaves or the convexes. In this case, the recording medium improves the stability and the reliability of the format signal.

The magnetic recording medium and the recording and reproducing method and apparatus for the magnetic recording medium of the present invention should not be limited to the structures described above as well as the structures described below. The magnetic recording medium and the recording and reproducing method and apparatus for the magnetic recording medium of the present invention may be any magnetic recording medium on which a format signal (e.g. a signal formed by changing the magnetic properties of the recording layer or a reference signal for servo) can be recorded, and recording and reproducing method and apparatus for such a magnetic recording medium.

For example, the recording may be performed by changing the magnetization direction of the recording layer, by changing the magnetic anisotropy of the recording layer, or by oxidizing the recording medium and changing the magnetic properties of the recording layer. It is preferable to detect information that has been recorded with this method. This method significantly improves the productivity of the magnetic recording medium and significantly reduces the cost of the magnetic recording medium. This method improves the signal characteristics of the magnetic recording medium. This consequently enables the magnetic recording medium to have good tracking characteristics and good signal characteristics. Further, this method enables format signals to be recorded in a stable manner even when data is recorded with high density on the magnetic recording medium. This consequently enables the magnetic recording medium, the recording and reproducing apparatus, and the recording and reproducing method to achieve good characteristics.

Preferred embodiments of the present invention will now be described in more detail.

### Embodiment 1

An embodiment of the present invention will now be described with reference to the drawings.

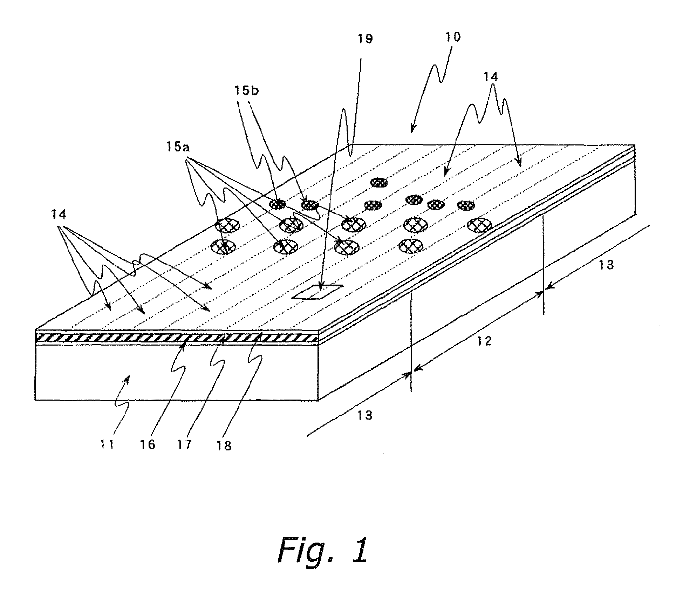

FIG. 1 is a cross-sectional view showing the structure of a magnetic recording medium (hereafter referred to as a magnetic disk 10) in Embodiment 1 of the present invention.
The magnetic disk 10 has a laminated structure of a transparent substrate 11, a under layer 16, a recording layer including a magnetic layer group 17, and a protective layer 18, which are formed one on top of another in the stated order. The substrate 11 is made of glass and has a polished surface. The protective layer 18 protects the recording layer and enables a magnetic head 19 to be slidable thereon.

Recording tracks 14 are defined on the magnetic disk 10 (e.g. with a track pitch of 0.3 µm). Format signal regions 12 and data regions 13 are formed on the recording tracks 14.

A local probe array is used to record a format signal on the magnetic disk 10. The local probe array includes a probe that is arranged to face the magnetic disk so as to scan the magnetic disk surface. A magnetic field applied from the probe changes the direction of magnetization of the magnetic disk. Through this, the format signal is recorded in a desired region of the magnetic disk.

This method enables format signals (including pit signals for tracking servo or other purposes and address signals) to be formed in the format signal regions 12 defined on the recording tracks 14 of the magnetic disk 10, and enables the signals including signals for tracking servo and address signals to be detected.

This method eliminates the need to record servo signals for tracking servo or other signals on each individual magnetic disk using a servo writer, and avoids the time-consuming and cost-increasing task, which is required by the conventional recording media.

Even when the magnetic disk is improved toward higher-density recording, positions on the magnetic disk are controlled easily in the tracking direction. More specifically, this eliminates the need to consider positions on the recording tracks recognized by the servo writer relative to positions on the recording tracks recognized by an actual recording and reproducing apparatus, or their positional deviations in the radial direction of the magnetic disk occurring when, for example, the ambient temperature changes. As a result, format signals (e.g. signals containing position information and signals representing servo pits), which serve as references, are recorded precisely on the disk. Such precisely-recorded format signals are used as references in subsequent recording and reproduction. As a result, the magnetic disk will have high stability against temperature changes and have good signal characteristics. The magnetic disk with good signal characteristics prevents recording signals or reproduction signals from deteriorating, and prevents the amount of reproduction signals from decreasing. It is preferable that the format signals have different magnetic properties depending on their functions, or more specifically depending on whether the format signals are for example signals containing position information or signals representing servo pits.

Information is recorded on and reproduced from the magnetic disk 10 with a recording and reproducing apparatus. More specifically, while the disk is being rotated, information to be recorded is modulated at the magnetic head 19 and is recorded on the magnetic layer group 17 of the recording layer through the protective layer 18 based on a recording signal modulated according to an information signal. The magnetic head 19 may for example be a GMR (giant magneto resistive) head. To reproduce information, the recording and reproducing apparatus detects a magnetic flux that is produced from recoded magnetic domains. In this manner, the recording and reproducing apparatus records recording marks with high density or reproduces the recording marks that have been recorded with high density.

A method for fabricating the magnetic disk will now be described in detail.
A target is set in a DC magnetron sputtering apparatus. A glass substrate, whose surface has been polished, is fixed to the substrate holder. Then, the chamber is evacuated with a turbo-molecular pump to create a high vacuum of 8*10⁻⁶ Pa or less in the chamber. While the chamber is being evacuated, Ar gas and N₂ gas are introduced into the chamber until the pressure within the chamber becomes 0.3 Pa. While the substrate is being rotated in a vacuum of 0.8 Pa, a dielectric layer of for example SiN, which functions as a under layer, is formed by reactive sputtering. The under layer is formed to have a thickness of 5 nm.

Further, Ar gas is introduced into the chamber until the pressure becomes 1.5 Pa. While the substrate is being rotated, a recording layer, which is a layer of TbFeCo, is formed by DC magnetron sputtering using sputtering targets of Tb, Fe, and Co. The recording layer is formed to have a thickness of 40 nm. The composition of the TbFeCo layer can be optimized by adjusting the power used to apply each of these targets. For example, the TbFeCo layer is formed to have a compensation composition temperature of 120°C and a Curie temperature of 310°C by adjusting the power used to apply each of these targets. The recording layer with this composition has a coercive force of 8 koe or less at room temperature. This recording layer will form even small magnetic domains in a stable manner when such small magnetic domains are recorded on the recording layer with the magnetic head, and will have good signal characteristics even in repeated recording and reproduction when such repeated recording and reproduction is performed on the recording layer with the magnetic head.

Next, a layer of diamond-like carbon (DLC) is formed on the recording layer. The DLC layer is formed by reactive RF (radio frequency) sputtering performed using carbon as a target in an atmosphere of a mixture of Ar and CH₄. The DLC layer is formed to have a thickness of 5 nm. Perfluoropolyether (PFPE) is coated on the DLC layer to form a protective layer 18.

As described above, the magnetic disk 10 fabricated with this method allows format signals to be recorded on its recording layer by changing the direction of magnetization of the recording layer using the probe. In the present embodiment, format signals may be recorded using the probe that is being heated or using a plurality of probe arrays.
The magnetic disk 10 may further allow data signals (or more specifically main data) to be recorded or reproduced using the probe with the method described above. When data signals are recorded with the above method, the magnetic disk 10 achieves even higher recording and reproduction densities.

The track pitch of the magnetic recording medium of the present invention should not be limited to be 0.3 µm. It is only required that the width of the recording tracks on which information is recorded is 0.6 µm or less and that the length of the shortest one of the recording marks for recording information in recording domains is 0.3 µm or less. It is more preferable that the width of the recording tracks is 0.2 µm or less.
The magnetic recording medium of the present invention enables the recorded magnetic domains to have stable shapes on the information tracks. This reduces the problems of crosswrite and crosstalk, which occur as a result of interference with adjacent tracks during recording and reproduction.

### Embodiment 2

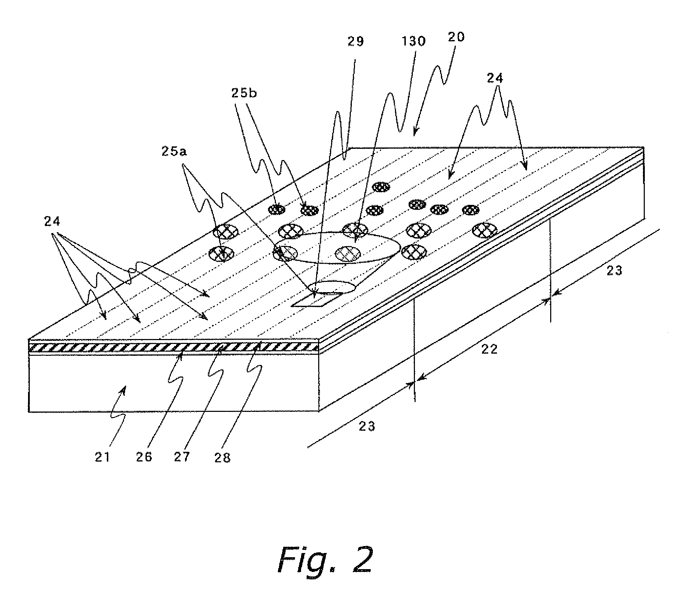

FIG. 2 is a cross-sectional view showing the structure of a magnetic disk in Embodiment 2 of the present invention.
The magnetic disk 20 has a laminated structure of a substrate 21, a under layer 26, a recording layer including a magnetic layer group 27, and a protective layer 28, which are formed one on top of another in the stated order. The substrate 21 is made of metal. The under layer 26 is a metal layer of AlTi. The protective layer 28 protects the recording layer and enables a magnetic head 29 to be slidable thereon. The magnetic disk 20 is usable with an apparatus including an optical head 130 that includes an objective lens for irradiating the magnetic disk 20 with light.

A surface of the substrate 21 has been polished and then textured. The under layer provides an adjusted underlying layer below the recording layer and protects the recording layer. As shown in FIG. 12, the recording layer includes a memory layer 301 for storing information, a readout layer 303 for detecting information by displacing domain walls, and an intermediate layer 302 (also referred to as an intermediate isolating layer or a switching layer) for controlling exchange-coupling between the readout layer 303 and the memory layer 301. Further, the protective layer 28 functions as a heat insulating protective layer as well as a lubricating protective layer for improving levitating performance of the magnetic head.

Recording tracks 24 are defined on the magnetic disk 20 (e.g. with a track pitch of 0.25 µm). Format signal regions 22 and data regions 23 are formed on the recording tracks 24.
A local probe array is used to record a format signal on the magnetic disk 20. The local probe array includes a probe whose tip is arranged to face the magnetic disk so as to scan the magnetic disk surface. The scanning is performed on the magnetic recording medium by the probe that is being heated. The scanning on the magnetic recording medium changes the magnetic anisotropy of the recording layer of the magnetic recording medium. Through this, the format signal is recorded on the magnetic recording medium.

This method enables format signals (including pit signals for tracking servo or other purposes and address signals) to be formed in the format signal regions 22 defined on the recording tracks 24 of the magnetic disk 20, and enables the signals including signals for tracking servo and address signals to be detected.
This method eliminates the need to prerecord servo signals for tracking servo and other purposes on each individual magnetic disk using a servo writer, and avoids the time-consuming and cost-increasing task, which is required by the conventional recording media.

The recording layer of the magnetic disk 20 is irradiated with a laser beam applied through the protective layer, and signals are recorded, reproduced, or detected on the magnetic disk 20 with the magnetic head. This enables small recording marks, which are smaller than marks detectable with the laser light spot used for reproduction, to be recorded and reproduced.
This magnetic disk is applicable to DWDD (domain wall displacement detection), which sequentially displaces domain walls immediately when the laser beam reaches the domain walls by using a temperature gradient produced through the laser beam irradiation and detects the displacement of the domain walls with the magnetic head. The use of DWDD improves the detection sensitivity of the magnetic head during reproduction, and enables super-resolution reproduction.

DWDD, which is one of the technologies of increasing the amplitude and the amount of reproduction signals through displacement of domain walls, is described, for example, in Japanese Unexamined Patent Publication No. H6-290496.
In the recording layer of the magnetic recording medium that is applicable to this technology, the memory layer may be formed by a magnetic layer having a large interfacial saturation coercive force, the readout layer in which domain walls are displaced may be formed by a magnetic layer having a small interfacial saturation coercive force, and the intermediate switching layer may be formed by a magnetic layer having a relatively low Curie temperature. However, the recording layer should not be limited to this film structure. The recording layer may be composed of any magnetic layers that enable the magnetic recording medium to be applicable to DWDD.

The basic principle of reproduction with DWDD will now be described with reference to FIG. 12.
FIG. 12A shows the cross section of the recording layer of the magnetic disk while the magnetic disk is rotating. The recording layer has a laminated structure of the three layers: the readout layer 303, the intermediate layer 302, and the memory layer 301, which are formed one on top of another on the disk substrate (not shown). Although not shown, the dielectric layer, which functions as the under layer, is further formed on the substrate, and the protective layer, which functions as the lubricating layer, is formed on the recording layer.

The readout layer 303 is formed from a magnetic film material having a small coercive force of domain walls. The intermediate layer 302 is formed by a magnetic layer having a low Curie temperature. The memory layer 301 is formed by a magnetic layer that can store even small recorded magnetic domains with a small domain diameter. Here, the readout layer has a magnetic domain structure including unclosed domain walls, which are formed by arranging guard bands or the like between recording tracks.

Information signals are formed as recorded magnetic domains, which have been thermomagnetically recorded on the memory layer. In the recording layer at room temperature that is not being irradiated with a laser beam spot, the memory layer, the intermediate layer, and the readout layer are strongly exchange-coupled to one another. In this state, the recorded magnetic domains of the memory layer are transferred as they are in the memory layer to the readout layer, and are formed on the readout layer.

FIG. 12B shows the temperature T of the recording layer at positions x, which correspond to positions shown in the cross-sectional view of FIG. 12A. During reproduction of recording signals, the disk rotates and the laser beam spot for reproduction is applied along the tracks formed on the disk. Here, the recording layer has the temperature distribution shown in FIG. 12B. The temperature distribution includes a temperature region Ts in which the temperature of the intermediate layer reaches and exceeds its Curie temperature Tc. In the temperature region Ts, the exchange-coupling between the readout layer and the recording layer is decoupled.

When the beam for reproduction is applied, the energy density σ of domain walls at positions χ in the disk rotating direction corresponding to the positions shown in FIGs. 12A and 12B will have an energy density gradient as indicated by the dependency on the domain wall energy density σ shown in FIG. 12C. As a result, the driving force F that drives domain walls acts on domain walls of each layer at positions χ as shown in FIG. 12D.

The force F acting on the recording layer functions to displace domain walls toward a smaller domain wall energy density σ. The readout layer has a small domain wall coercive force and a high domain wall mobility. Thus, the readout layer alone, which includes unclosed domain walls, allows the force F to displace its domain walls easily. As a result, the domain walls of the readout layer instantaneously displace toward regions with higher temperatures and smaller domain wall energy densities as indicated by arrows in the figure. When domain walls of the readout layer pass through the beam spot for reproduction, most regions of the readout layer that fall within the beam spot will have the uniform direction of magnetization.

As a result, the reproduced magnetic domains will always have the constant maximum amplitude irrespective of the size of the recorded magnetic domains. Even when signals are reproduced using the magnetic head, such as a GMR head, the temperature of the recording layer is being raised through the light beam irradiation or the like. As a result, the magnetic domains transferred to the readout layer will be expanded, and consequently the reproduction signals will always have the amount corresponding to the constant maximum amplitude.

To record information, the disk rotates and the laser beam spot is applied along the tracks formed on the disk. While the rotating disk is being irradiated with the laser beam spot, the information is recorded with the magnetic head. Here, the coercive force of the recording layer decreases at high temperature. With the coercive force decreased, the recording layer allows recording performed with the magnetic head. To reproduce signals, the laser beam is applied to the disk to raise the temperature of the disk. While the disk is being irradiated with the laser beam, the transferred magnetic domains are expanded by moving the domain walls using DWDD described above. In this state, the reproduced magnetic domains are detected with the GMR head. Here, the structure may be such that the saturation magnetization Ms of the readout layer also increases as the temperature increases. In this case, the reproduction signals are maximized during the temperature increase. This improves the detection sensitivity of the GMR head, and increases the amount of reproduction signals further.

The magnetic recording medium of the present invention has the laminated structure of the substrate, the under layer, the recording layer, and the protective layer, and enables the magnetic anisotropy of the recording layer to be changed by the probe scanning the recording layer while the tip of the probe is being heated. The magnetic recording medium allows format signals including servo signals to be formed thereon by changing the magnetic anisotropy of the recording layer through the scanning. This structure eliminates the need to record servo signals using a servo writer, and reduces the time and the manufacturing cost of the magnetic recording medium. Further, position information, which serves as references, is recorded precisely on the disk. This enables the magnetic disk to have stable servo characteristics against changes in the ambient temperature or changes in the temperature of the magnetic disk, which occur when the laser beam is applied to the recording layer during recording or reproduction. More specifically, the present invention solves the problem with the conventional recording medium that its servo characteristics may change and deteriorate and further its recording and reproduction characteristics may deteriorate as the temperature of the magnetic disk is raised through irradiation of the recording layer with the laser beam. The present invention consequently enables the magnetic recording medium to have high heat endurance and good signal characteristics even when signals are reproduced using the magnetic head, such as the GMR head, while the temperature of the recording layer of the magnetic recording medium is being raised through light beam irradiation or the like.

Here, the magnetic anisotropy Ku of a region of the recording layer in which a format signal (e.g. a servo pit) has been recorded changes to 1*10⁵ erg/cm² or less. Thus, the GMR head detects the format signal based on a change in the magnetization of the recording layer.

A method for fabricating the magnetic disk 20 will now be described in detail.
A surface of a substrate 21, which is made of metal, is first polished and then textured.
A target is set in a DC magnetron sputtering apparatus, and the substrate is fixed to the substrate holder. Then, the chamber is evacuated with a turbo-molecular pump to create a high vacuum of 8* 10⁻⁶ Pa or less in the chamber. While the chamber is being evacuated, Ar gas is introduced into the chamber until the pressure within the chamber becomes 0.4 Pa. While the substrate is being rotated, a metal layer of for example AlTi, which functions as an under layer, is formed to have a thickness of 4 nm. Further, Ar gas and N₂ gas are introduced, and an AlTiN layer is formed in a vacuum of 0.2 Pa by reactive sputtering.

While the chamber is being evacuated, Ar gas is introduced into the chamber until the pressure becomes 1.8 Pa. While the substrate is being rotated, a recording layer, which is a layer of TbFeCo, is formed by DC magnetron sputtering using a TbFeCo alloy as a target. The recording layer is formed to have a thickness of 60 nm.

Next, the vacuum chamber is moved while being evacuated, and Ar gas is introduced into the chamber until the pressure becomes 2.0 Pa. While the substrate is being rotated, an intermediate layer, which is a layer of TbFeCoCr, is formed by DC magnetron sputtering using a TbFeCoCr alloy as a target. The intermediate layer is formed to have a thickness of 20 nm. Further, the vacuum chamber is moved while being evacuated, and Ar gas is introduced into the chamber until the pressure becomes 0.8 Pa. While the substrate is being rotated, a readout layer, which is made of GdFeCoCr, is formed by DC magnetron sputtering using a GdFeCoCr alloy as a target. The readout layer is formed to have a thickness of 30 nm. Here, the compositions of the TbFeCo, TbFeCoCr, and GdFeCo layers can be optimized by adjusting the ratios of the alloy targets and the conditions employed to form the layers. For example, the TbFeCo layer is formed to have a compensation composition temperature of -50°C and a Curie temperature of 310°C by adjusting its composition. As a result, the recording layer has such properties that its coercive force Hc decreases as the temperature reaches and increases above room temperature. At high temperature, the recording layer will have a small coercive force and allow recording performed with the magnetic head.

Then, Ar gas and N₂ gas are introduced into the chamber until the pressure becomes 0.3 Pa. While the substrate is being rotated, an under layer of a dielectric material such as SiN is formed by reactive sputtering. The under layer is formed to have a thickness of 4 nm.
A layer of DLC is formed on the protective layer by ECR (electron cyclotron resonance) plasma CVD (or reactive RF sputtering) using plasma CVD (chemical vapor deposition) or using carbon as a target in an atmosphere of a mixture of Ar and CH₄. The DLC layer is formed to have a thickness of 3 nm. PFPE is coated on the DLC layer to form a PFPE layer (e.g. a lubricating layer), which functions as a protective layer.

The magnetic recording medium of the present embodiment allows signals to be reproduced with DWDD using a temperature gradient produced through light beam irradiation. Moreover, the saturation magnetization Ms of the readout layer reaches its maximum value at 90°C. Thus, the magnetic recording medium of the present invention effectively increases the amount of reproduction signals further.
The above structure enables the recording layer to form even small magnetic domains in a stable manner when such small magnetic domains are recorded on the recording layer, and also to have good signal characteristics even in repeated recording and reproduction when such repeated recording and reproduction is performed on the recording layer with the magnetic head.

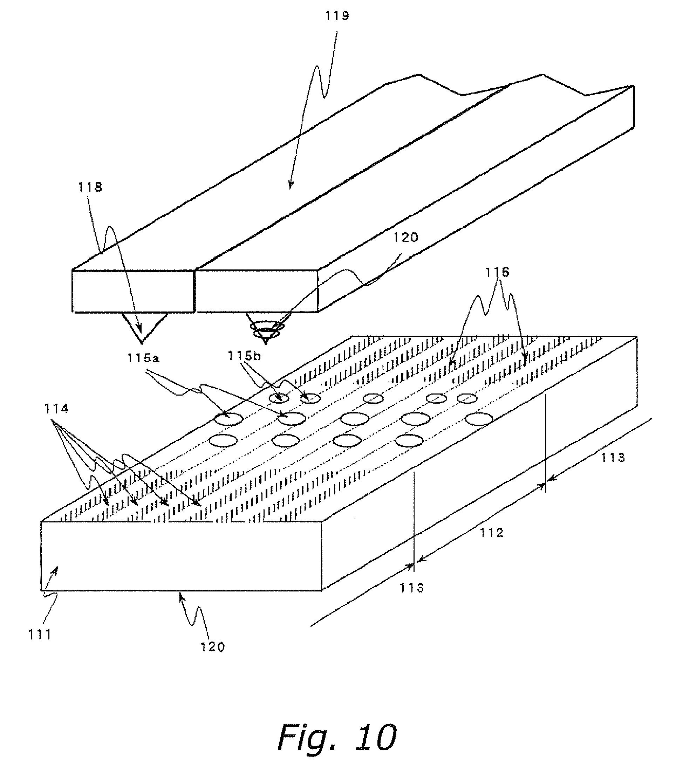

A probe array in which a plurality of probes are arranged may be used as shown in FIG. 10. In this case, format signals are recorded at higher speed.
Further, the probe attached to the local probe array for scanning the magnetic recording medium may be used to reproduce data signals, which are main data, while the recording layer is being heated. In this case, a temperature gradient may be produced through heating of the recording layer, and may be used to expand magnetic domains of the readout layer of the recording layer and reproduce the expanded magnetic domains with the DWDD operation. In this case, reproduction signals will be high-quality signals with high density.
The track pitch of the magnetic recording medium is 0.25 µm in the present embodiment. However, the structure in which the width of the grooves on which information is recorded is 0.6 µm or less and the length of the shortest one of the recording marks for recording information in recording domains is 0.3 µm or less would be even more advantageous.
The magnetic recording medium of the present invention enables the recorded magnetic domains to have stable shapes on the information tracks. This reduces the problems of crosswrite and crosstalk, which occur as a result of interference with adjacent tracks during recording and reproduction.

### Embodiment 3

An embodiment of the present invention will now be described in detail with reference to the drawings.

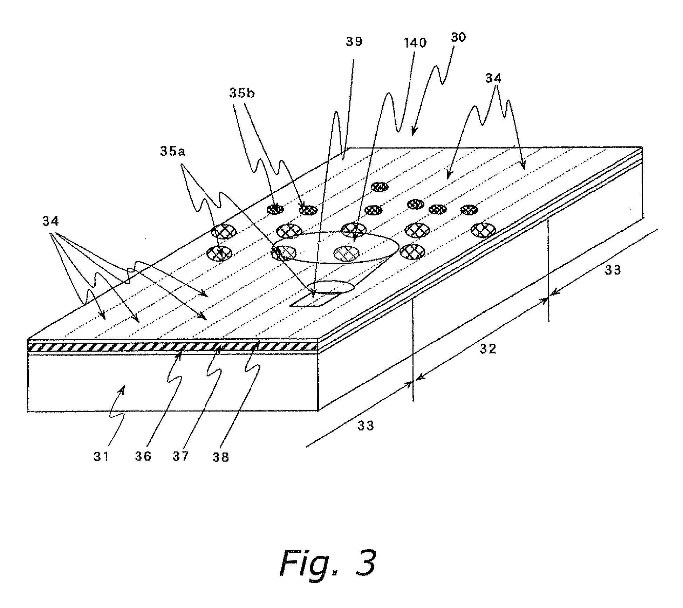

FIG. 3 is a cross-sectional view showing the structure of a magnetic disk 30 in Embodiment 3 of the present invention.
The magnetic disk 30 has a laminated structure of a transparent substrate 31, an under layer 36, a recording layer including a magnetic layer group 37, and a protective layer 38, which are formed one on top of another in the stated order. The substrate 31 is made of glass. The under layer 36 is made of AlTi. The protective layer 38 protects the recording layer and enables a magnetic head 39 to be slidable thereon. The magnetic disk 30 is usable with an apparatus including an optical head 140 that includes an objective lens for irradiating the magnetic disk 30 with light.

A surface of the substrate 31 has been first polished and then processed to have a uniform surface roughness. The under layer 36 provides an adjusted underlying layer below the recording layer and protects the recording layer. The under layer 36 may be formed from a dielectric material. In the same manner as in Embodiment 2, the recording layer includes a memory layer 301 for storing information, a readout layer 303 for detecting information by displacing domain walls, and an intermediate layer 302 for controlling exchange-coupling between the readout layer and the memory layer. The protective layer 38 functions as a lubricating protective layer for protecting the recording layer as well as for improving levitating performance of the magnetic head.

Recording tracks 34 are defined on the magnetic disk 30 (e.g. with a track pitch of 0.25 µm). Format signal regions 32 and data regions 33 are formed on the recording tracks 34.

A local probe array is used to record a format signal on the magnetic disk 30. The local probe array includes a probe whose tip is arranged to face the magnetic disk so as to scan the magnetic disk surface. The scanning on the magnetic recording medium is performed by the probe that is being heated. The scanning on the magnetic recording medium oxidizes the recording layer of the magnetic recording medium and changes the magnetic properties of the recording layer. Through this, the format signal is recorded on the magnetic recording medium.

In the present embodiment, guard bands may be formed between the recording tracks of the recording layer by the probe scanning between the tracks of the magnetic recording medium.
This method enables format signals (including pit signals for tracking servo or other purposes and address signals) to be formed in the format signal regions 32 defined on the recording tracks 34 of the magnetic disk 30, and enables tracking servo and address signals to be detected.

This method avoids the time-consuming and cost-increasing task, which is required by the conventional recording media. More specifically, this method eliminates the need to record servo signals for tracking servo and other purposes on each individual magnetic disk using a servo writer.

Even when the magnetic disk is improved toward higher-density recording, positions on the magnetic disk are controlled easily in the tracking direction. More specifically, this eliminates the need to consider positions on the recording tracks recognized by the servo writer relative to positions on the recording tracks recognized by an actual recording and reproducing apparatus, or their positional deviations in the radial direction of the magnetic disk occurring when, for example, the ambient temperature changes. As a result, format signals (e.g. signals containing position information and signals representing servo pits), which serve as references, are recorded precisely on the disk. Such precisely-recorded format signals are used as references in subsequent recording and reproduction. As a result, the magnetic disk will have high stability against temperature changes and have good signal characteristics. The magnetic disk with good characteristics prevents recording signals or reproduction signals from deteriorating, and prevents the amount of reproduction signals from decreasing. The magnetic disk reduces problems including crosserase and crosstalk, which occur as a result of interference with adjacent tracks. The format signals may have different magnetic properties depending on their functions, or more specifically depending on whether the format signals are signals containing position information or signals representing servo pits.

Signals are recorded on or reproduced from the magnetic disk 30 with a recording and reproducing apparatus. More specifically, the disk rotates and a laser beam spot is applied along the tracks formed on the recording layer 37 through the protective layer 38. While the rotating disk is being irradiated with the laser beam spot, signals are recorded, reproduced, or detected on the magnetic disk 30 with the magnetic head 39. Here, the coercive force of the recording layer decreases at high temperature. With the coercive force decreased, the recording layer allows recording performed with the magnetic head. To reproduce signals, the laser beam is applied to the disk to raise the temperature of the disk. While the disk is being irradiated with the laser beam, recorded magnetic domains are detected with a GMR head. In this manner, the recording and reproducing apparatus records recording marks with high density or reproduces the recording marks that have been recorded with high density. More specifically, this enables small recording marks, which are smaller than marks detectable with the laser light spot used for reproduction, to be recorded and reproduced.

To reproduce signals, the laser beam is applied to the recording layer having the same structure as the recording layer in Embodiment 2 to raise the temperature of the recording layer. While the disk is being irradiated with the laser beam, the transferred magnetic domains are expanded by moving the domain walls using DWDD described above. In this state, the reproduced magnetic domains are detected with the GMR head. Here, the structure may be such that the saturation magnetization Ms of the readout layer also increases as the temperature increases. In this case, the reproduction signals are maximized during the temperature increase. This improves the detection sensitivity of the GMR head, and increases the amount of the reproduction signals.

More specifically, this magnetic disk is applicable to DWDD, which sequentially displaces domain walls immediately when the laser beam reaches the domain walls by using a temperature gradient produced through the laser beam irradiation and detects the displacement of the domain walls with the magnetic head. The use of DWDD improves the detection sensitivity of the magnetic head during reproduction, and enables super-resolution reproduction.

As a result, the reproduced magnetic domains will always have the constant maximum amplitude irrespective of the size of the recorded magnetic domains. Even when signals are reproduced using the magnetic head, such as the GMR head, the temperature of the recording layer is being raised through the light beam irradiation or the like. As a result, the magnetic domains transferred to the readout layer will be expanded, and consequently the reproduction signals will always have the amount corresponding to the constant maximum amplitude.

The magnetic recording medium of the present invention has the laminated structure of the substrate, the under layer, the recording layer, and the protective layer, and enables the perpendicular magnetic anisotropy of the recording layer to be reduced or the recording layer to be oxidized by the probe scanning the recording layer while the tip of the probe is being heated. The magnetic recording medium allows format signals including servo signals to be formed thereon by changing the magnetic anisotropy of the recording layer through the scanning. This structure eliminates the need to record servo signals using a servo writer. Further, position information, which serves as references, is recorded precisely on the disk. As a result, the magnetic recording medium allows recording and reproduction using servo pits having different magnetic properties as references. This enables the magnetic disk to have stable servo characteristics against changes in the ambient temperature or changes in the temperature of the magnetic disk, which occur when the laser beam is applied to the recording layer during recording or reproduction. More specifically, the present invention solves the problem with the conventional recording medium that its servo characteristics may change and deteriorate and further its recording and reproduction characteristics may deteriorate as the temperature of the magnetic disk is raised through irradiation of the recording layer with the laser beam. The present invention consequently enables the magnetic recording medium to have high heat endurance and good signal characteristics even when signals are reproduced using the magnetic head, such as the GMR head, while the temperature of the recording layer of the magnetic recording medium is being raised through light beam irradiation or the like.

Here, the magnetic anisotropy Ku of a region of the recording layer in which a format signal (e.g. a servo pit) has been recorded changes to 1*10⁵ erg/cm² or less. Thus, the GMR head detects the format signal based on a difference in the magnetization between the pit region and other regions.

A method for fabricating the magnetic disk 30 will now be described in detail.
A surface of a substrate 31, which is made of transparent glass, is first polished and then textured.

An AlTi target is set in a DC magnetron sputtering apparatus, and the substrate is fixed to the substrate holder. Then, the chamber is evacuated with a turbo-molecular pump to create a high vacuum of 9*10⁻⁶ Pa or less in the chamber. While the chamber is being evacuated, Ar gas is introduced into the chamber until the pressure within the chamber becomes 0.3 Pa. While the substrate is being rotated, a metal layer of for example AlTi, which functions as an under layer, is formed to have a thickness of 4 nm. Further, Ar gas and N₂ gas are introduced, and an AlTiN layer is formed by reactive sputtering.

While the chamber is being evacuated, Ar gas is introduced into the chamber until the pressure becomes 1.5 Pa. While the substrate is being rotated, a recording layer, which is a layer of TbFeCo, is formed by DC magnetron sputtering using a TbFeCo alloy as a target. The recording layer is formed to have a thickness of 50 nm.

Next, the vacuum chamber is moved while being evacuated, and Ar gas is introduced into the chamber until the pressure becomes 2.0 Pa. While the substrate is being rotated, an intermediate layer, which is a layer of TbFeCoCr, is formed by DC magnetron sputtering using a TbFeCoCr alloy as a target. The intermediate layer is formed to have a thickness of 15 nm. Further, the vacuum chamber is moved while being evacuated, and Ar gas is introduced into the chamber until the pressure becomes 0.8 Pa. While the substrate is being rotated, a readout layer, which is made of GdFeCoCr, is formed by DC magnetron sputtering using a GdFeCoCr alloy as a target. The readout layer is formed to have a thickness of 35 nm. Here, the compositions of the TbFeCo, TbFeCoCr, and GdFeCo layers can be optimized by adjusting the ratios of the alloy targets and the conditions employed to form the layers including the power used to apply each of the targets. For example, the TbFeCo layer is formed to have a compensation composition temperature of 130°C and a Curie temperature of 320°C by adjusting the power used to apply each of these targets. The recording layer with this composition has a coercive force of 6 koe or less at room temperature. This recording layer will form even small recording magnetic domains in a stable manner when such small magnetic domains are recorded on the recording layer with the magnetic head, and will have good signal characteristics even in repeated recording and reproduction when such repeated recording and reproduction is performed on the recording layer with the magnetic head.

A DLC layer is formed on the recording layer by reactive RF sputtering using CVD or using carbon as a target in an atmosphere of a mixture of Ar and CH₄. The DLC layer is formed to have a thickness of 3 nm. PFPE is coated on the DLC layer to form a PFPE layer (e.g. a lubricating layer), which functions as a protective layer.

As a result, the recording layer has such properties that its coercive force He decreases as the temperature reaches and increases above room temperature. At high temperature, the recording layer will have a small coercive force and allow recording performed with the magnetic head.
Further, the magnetic recording medium of the present embodiment allows signals to be reproduced with DWDD using a temperature gradient produced through light beam irradiation. Moreover, the saturation magnetization Ms of the readout layer reaches its maximum value at 90°C. Thus, the magnetic recording medium of the present invention effectively increases the amount of reproduction signals further.

The above structure enables the recording layer to form even small magnetic domains in a stable manner when such small magnetic domains are recorded on the recording layer, and also to have good signal characteristics even in repeated recording and reproduction when such repeated recording and reproduction on the recording layer is performed with the magnetic head.
A probe array in which a plurality of probes are arranged may be used as shown in FIG. 10. In this case, format signals are recorded at higher speed.

Further, the probe attached to the local probe array for scanning the magnetic recording medium may be used to reproduce data signals, which are main data. More specifically, the probe is heated to oxidize the recording layer or to change the magnetic properties of the recording layer. This method is applicable to a write-once magnetic recording medium, and enables writing and reproducing with high densities on the write-once magnetic recording medium.

The track pitch of the magnetic recording medium is 0.35 µm in the present embodiment. However, the structure in which the width of the grooves on which information is recorded is 0.6 µm or less and the length of the shortest one of the recording marks for recording information in recording domains is 0.3 µm or less would be even more advantageous.
The magnetic recording medium of the present invention enables the recorded magnetic domains to have stable shapes on the information tracks. This reduces the problems of crosswrite and crosstalk, which occur as a result of interference with adjacent tracks during recording and reproduction.

### Embodiment 4

An embodiment of the present invention will now be described in detail with reference to the drawings.

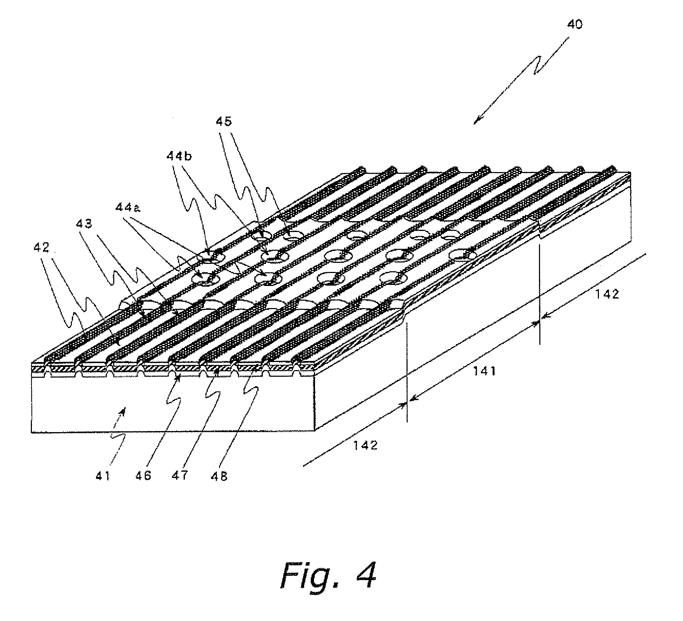

FIG. 4 is a cross-sectional view showing the structure of a magnetic disk 40 in Embodiment 4 of the present invention.
The magnetic disk 40 has a laminated structure of a transparent substrate 41, an under layer 46, a recording layer including a magnetic layer group 47, and a protective layer 48, which are formed one on top of another in the stated order. The substrate 41 is made of glass. The under layer 46 is made of AlTi. The protective layer 48 protects the recording layer and enables a magnetic head to be slidable thereon.

Grooves 42 and lands 43 are formed on the substrate 41. Further, pits (e.g. address pits 45 and wobble pits 44a and 44b), which function as format signals, are formed in regions corresponding to format signal regions 141, which will be described later.
Here, the track pitch is 0.4 µm, and the pit diameter is 0.3 µm.

The magnetic disk 40 of the present embodiment with this structure is irradiated with light applied through an objective lens of an optical head. While being heated through the light irradiation, the magnetic disk 40 allows information to be recorded and reproduced with the magnetic head.

A surface of the substrate 41 has pits or grooves, which have been transferred to the surface by imprinting using a stamper, on which pits are formed. The stamper is formed to have grooves or pits using a photoresist. The pits or grooves of the stamper are transferred from the stamper onto the disk substrate by a technique using imprinting.

The surface of the substrate 41 has been first polished and then textured to have a uniform surface roughness. For example, self-organized fine particles may be used to adjust the surface roughness Ra of the pit regions of the substrate surface to be 0.5 nm or greater. Alternatively, fine particles may be applied on the substrate surface or in the pit ergions or in the groove regions to adjust the surface roughness.

The under layer 46 provides an adjusted underlying layer below the recording layer and protects the recording layer. The under layer 46 may be formed from a dielectric material. In the same manner as in Embodiment 2, the magnetic layer group 47 of the recording layer is composed of a memory layer 301 for storing information, a readout layer 303 for detecting information by displacing domain walls, and an intermediate layer 302 for controlling exchange-coupling between the readout layer and the memory layer. Further, the protective layer 48 functions as a lubricating protective layer for protecting the recording layer as well as for improving levitating performance of the magnetic head.

Recording tracks are defined on the magnetic disk 40 (e.g. with a track pitch of 0.25 µm). The format signal regions 141 and data regions 142 are formed on the recording tracks.

A local probe array is used to record a format signal on the magnetic disk 40. The local probe array includes a probe that is arranged to face the magnetic disk so as to scan the magnetic disk surface. The scanning on the magnetic recording medium is performed by the probe that is being heated. The scanning on the magnetic recording medium performed by the probe changes the magnetic properties of the recording layer of the magnetic recording medium. Through this, the format signal is recorded on the magnetic recording medium.
Concaves and convexes using pits or grooves are formed on the substrate 41. The probe may scan the disk surface while tapping the disk surface to change the magnetic anisotropy of the recording layer and to perform recording.

In the present embodiment, guard bands are formed between the recording tracks of the recording layer (e.g. within data regions in which main data is recorded) by the probe scanning between the tracks of the magnetic recording medium.
Further, the recording may be performed in the format signal regions and in the guard band regions with different degrees of changes in the magnetic properties of the recording layer or with different widths of the recording regions. This is achieved by, for example, changing the heating temperature of the probe and/or by changing the shape of the tip of the probe between the format signal regions and the guard band regions. A probe array including a plurality of probes that differ from one another in its heating temperature or in the shape of its tip may be used to record a plurality of tracks altogether simultaneously. Such a probe array enables high speed recording.

Further, the recording may be performed by heating the recording layer with the probe and oxidizing the recording layer. Alternatively, the recording may be performed by applying a magnetic field to a coil mounted in the probe and changing the direction of magnetization of the recording layer.
This method enables format signals (including signals representing pits 44a and 44b for tracking servo or other purposes and address signals) to be formed in the format signal regions defined on the recording tracks of the magnetic disk 40 and changes the magnetic properties or the magnetization of the magnetic disk 40. This method consequently enables the signals including tracking servo signals and address signals to be detected.

This method eliminates the need to record servo signals for tracking servo and other purposes on each individual magnetic disk using a servo writer, which is required by the conventional recording media.
Even when the magnetic disk is improved toward higher-density recording, positions on the magnetic disk are controlled easily in the tracking direction. More specifically, this eliminates the need to consider positions on the recording tracks recognized by the servo writer relative to positions on the recording tracks recognized by an actual recording and reproducing apparatus, or their positional deviations in the radial direction of the magnetic disk occurring when, for example, the ambient temperature changes. As a result, format signals (e.g. signals containing position information and signals representing servo pits), which serve as references, are recorded precisely on the disk. Such precisely-recorded format signals are used as references in subsequent recording and reproduction. As a result, the magnetic disk will have high stability against temperature changes and have good signal characteristics. The magnetic disk with good characteristics prevents recording signals or reproduction signals from deteriorating, and prevents the amount of reproduction signals from decreasing. The magnetic disk reduces problems including crosserase and crosstalk, which occur as a result of interference with adjacent tracks.

Signals are recorded, reproduced, and detected on the magnetic disk 40 with a recording and reproducing apparatus. More specifically, the magnetic disk 40 rotates and a laser beam spot is applied along the tracks formed on the recording layer through the protective layer 48. While the rotating disk is being irradiated with the laser beam spot, signals are recorded, reproduced, and detected on the magnetic disk 40 with the magnetic head. Here, the coercive force of the recording layer decreases to 8 koe or less at high temperature. With the coercive force decreased to 8 koe or less, the recording layer allows recording performed with the magnetic head. To reproduce signals, the laser beam is applied to the disk to raise the temperature of the disk. While the disk is being irradiated with the laser beam, recorded magnetic domains are detected with a GMR head. In this manner, the recording and reproducing apparatus records recording marks with high density or reproduces the recording marks that have been recorded with high density. More specifically, this enables small recording marks, which are smaller than marks detectable with the laser light spot used for reproduction, to be recorded and reproduced.

To reproduce signals, the laser beam is applied to the recording layer having the same structure as the recording layer of Embodiment 2 to raise the temperature of the recording layer. While the recording layer is being irradiated with the laser beam, the transferred magnetic domains are expanded by moving the domain walls using DWDD described above. In this state, the reproduced magnetic domains are detected with the GMR head. Here, the structure may be such that the saturation magnetization Ms of the readout layer also increases as the disk temperature increases. In this case, the reproduction signals are maximized during the temperature increase. This improves the detection sensitivity of the GMR head, and increases the amount of reproduction signals further. For example, the recording layer may be a specific recording layer whose saturation magnetization Ms increases as the temperature increases when irradiated with laser light. The composition of this recording layer may be adjusted so that the saturation magnetization Ms reaches its maximum value at 60°C. This improves the detection sensitivity of the GMR head, and increases the amount of reproduction signals.

More specifically, this magnetic disk is applicable to DWDD, which sequentially displaces domain walls immediately when the laser beam reaches the domain walls by using a temperature gradient produced through the laser beam irradiation and detects the displacement of the domain walls with the magnetic head. The use of DWDD improves the detection sensitivity of the magnetic head during reproduction, and enables super-resolution reproduction.

As a result, the reproduced magnetic domains will always have the constant maximum amplitude irrespective of the size of the recorded magnetic domains. When signals are reproduced using the magnetic head, such as the GMR head, the temperature of the recording layer is being raised through the light beam irradiation or the like. As a result, the magnetic domains transferred to the readout layer will be expanded, and consequently the reproduction signals will always have the amount corresponding to the constant maximum amplitude.

The magnetic recording medium of the present invention has the laminated structure of the substrate, the under layer, the recording layer, and the protective layer, and enables the magnetic anisotropy of the recording layer to be changed by the probe scanning the recording layer while the tip of the probe is being heated. The magnetic recording medium allows format signals including servo signals to be formed thereon by changing the magnetic anisotropy of the recording layer through the scanning. This structure eliminates the need to record servo signals using a servo writer. Further, the magnetic recording medium of the present invention allows only irreversible recording. Thus, the signals formed on the magnetic recording medium will not be erased by mistake.

Further, position information, which serves as references, is recorded precisely on the disk. This enables the magnetic disk to have stable servo characteristics against changes in the ambient temperature or changes in the temperature of the magnetic disk, which occur when the laser beam is applied to the recording layer during recording or reproduction since it is possible to read and write with reference to the servo pits having different magnetic properties. More specifically, the present invention solves the problem with the conventional recording medium that its servo characteristics may change and deteriorate and further its recording and reproduction characteristics may deteriorate as the temperature of the magnetic disk is raised through irradiation of the recording layer with the laser beam. The present invention consequently enables the magnetic recording medium to have high heat endurance and good signal characteristics even when signals are reproduced using the magnetic head, such as the GMR head, while the temperature of the recording layer of the magnetic recording medium is being raised through light beam irradiation or the like.

Here, the magnetic anisotropy Ku of a region of the recording layer in which a format signal (e.g. a servo pit) has been recorded changes to 2*10⁵ erg/cm² or less. Thus, the GMR head detects the format signal based on a difference in the magnetization between the perpendicular elements.

Further, the magnetic anisotropy Ku of a region of the readout layer of the recording layer in which a guard band has been formed changes to 5*10⁴ erg/cm² or less. This enables the recording tracks to be magnetically decoupled from each other, and smoothly displaces the domain walls of the readout layer using a temperature gradient. As a result, signals are reproduced in a stable manner through the DWDD operation.

A method for fabricating the magnetic disk 40 will now be described in detail.
First, a stamper, on which grooves are formed in regions corresponding to format signal regions 141 and data regions 142 on recording tracks of a substrate 41 and pits having concaves and convexes are formed in regions corresponding to the format signal regions 141, is prepared. This stamper can be used to form grooves and pits by photoresist.

Next, the pits and the grooves on the stamper are transferred to a glass substrate through imprinting to form the substrate 41. Before the imprinting, the surface of the substrate is polished to have uniform surface properties. After the imprinting, the substrate has the pits in the format signal regions 141 on the recording tracks and grooves 42 and lands 43 in the format signal regions 141 and the data regions 142 on the recording tracks.

A target is set in a DC magnetron sputtering apparatus, and the substrate 71 is fixed to the substrate holder. Then, the chamber is evacuated with a turbo-molecular pump to create a high vacuum of 9*10⁻⁶ Pa or less in the chamber. While the chamber is being evacuated, Ar gas and O₂ gas are introduced into the chamber until the pressure within the chamber becomes 0.3 Pa. While the substrate is being rotated, an under layer, which is made of TaO, is formed by reactive sputtering. The under layer is formed to have a thickness of 10 nm.

While the chamber is being evacuated, Ar gas is introduced into the chamber until the pressure becomes 1.5 Pa. While the substrate is being rotated, a recording layer, which is a layer of TbFeCo, is formed by DC magnetron sputtering using a TbFeCo alloy as a target. The recording layer is formed to have a thickness of 60 nm.

Next, the vacuum chamber is moved while being evacuated, and Ar gas is introduced into the chamber until the pressure becomes 2.0 Pa. While the substrate is being rotated, an intermediate layer, which is a layer of TbFeCoCr, is formed by DC magnetron sputtering using a TbFeCoCr alloy as a target. The intermediate layer is formed to have a thickness of 20 nm. Further, the vacuum chamber is moved while being evacuated, and Ar gas is introduced into the chamber until the pressure becomes 0.6 Pa. While the substrate is being rotated, a readout layer, which is a layer of GdFeCoAl, is formed by DC magnetron sputtering using a GdFeCoAl alloy as a target. The readout layer is formed to have a thickness of 40 nm. Here, the compositions of the TbFeCo, TbFeCoCr, and GdFeCoAl layers can be optimized by adjusting the ratio of the alloy target and the conditions employed to form the layers including the ratio of the power applied to each of the targets. For example, the TbFeCo layer is formed to have a compensation composition temperature of 180°C and a Curie temperature of 330°C by setting the power applied to each of these targets to adjust the film composition. The recording layer with this composition has a coercive force of 6 koe or less at room temperature. This recording layer will form even small magnetic domains in a stable manner when such small magnetic domains are recorded on the recording layer with the magnetic head, and will have good signal characteristics even in repeated recording and reproduction when such repeated recording and reproduction is performed on the recording layer with the magnetic head.

A DLC layer is formed on the recording layer by reactive RF sputtering using CVD or using carbon as a target in an atmosphere of a mixture of Ar and CH₄. The DLC layer is formed to have a thickness of 3 nm. PFPE is coated on the DLC layer to form a PFPE layer (e.g. a lubricating layer), which functions as a protective layer.

As a result, the recording layer has such properties that its coercive force Hc decreases as the temperature reaches and increases above 180°C. At 180°C or higher temperatures, the recording layer will have a small coercive force and allow recording performed with the magnetic head.

Further, the magnetic recording medium of the present embodiment allows signals to be reproduced with DWDD using a temperature gradient produced through light beam irradiation. Moreover, the saturation magnetization Ms of the readout layer reaches its maximum value at 100°C. Thus, the magnetic recording medium of the present invention effectively increases the amount of reproduction signals further.

The above structure enables the recording layer to form even small magnetic domains in a stable manner when such small magnetic domains are recorded on the recording layer, and also to have good signal characteristics even in repeated recording and reproduction when such repeated recording and reproduction is performed on the recording layer with the magnetic head.
A probe array in which a plurality of probes are arranged may be used as shown in FIG. 10. In this case, format signals are recorded at higher speed. Further, format signals may be formed on the recording layer by applying a magnetic field to the recording layer using a coil 120 and changing the state of magnetization of the recording layer in the pit regions of the recording layer.

The track pitch of the magnetic recording medium is 0.25 µm in the present embodiment. However, the structure in which the width of the grooves on which information is recorded is 0.6 µm or less and the length of the shortest one of the recording marks for recording information in recording domains is 0.3 µm or less would be even more advantageous. The structure in which the track pitch corresponds to the track interval of 0.3 µm or less would be still more advantageous.

Although the present embodiment describes the magnetic disk 40 in which the pits and the grooves are formed through imprinting on the glass disk substrate 41 on which the recording layer is formed, the glass substrate may be directly processed to have the pits and the grooves thereon, or the pits and the grooves may be transferred to the glass substrate through heating and melting (particularly when the substrate is formed from a material with a relatively low melting temperature), or the pits and the grooves may be transferred with the use of photopolymer. Alternatively, only the pits or the grooves may be formed on the substrate using a different material. For example, the pits or the grooves may be formed using a metal material.

The substrate may have a region with desired surface properties and an appropriate surface roughness on its surface. Such a region on the substrate surface may be formed by adjusting the polishing and etching processes of the substrate surface.
The magnetic recording medium of the present invention enables the recorded magnetic domains to have stable shapes on the information tracks. This reduces the problems of crosswrite and crosstalk, which occur as a result of interference with adjacent tracks during recording and reproduction.

### Embodiment 5

An embodiment of the present invention will now be described in detail with reference to the drawings.

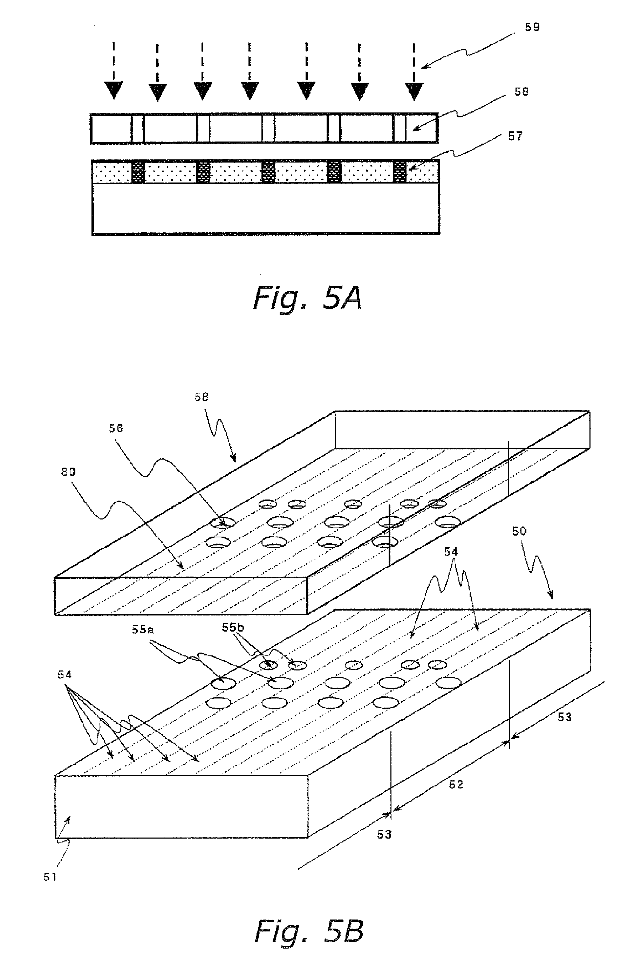

FIG. 5A is a cross-sectional view showing the structure of a magnetic disk in Embodiment 5 of the present invention, and FIG. 5B is a perspective view showing the structure of the magnetic disk.

The magnetic disk 50 includes a transparent substrate 51, which is made of glass, on which an under layer, a recording layer, and a protective layer are formed one on top of another.
The recording layer is composed of magnetic thin films, and has such properties that its coercive force He and its saturation magnetization Ms decrease as its temperature T increases.

The track pitch of the magnetic disk is 0.4 µm.
A mask 58 for formatting, which is patterned according to formation regions of servo pits, is arranged on a recording layer side surface of the magnetic disk. The magnetic disk is heated through the mask by irradiating the magnetic disk with light 59. This changes the magnetic properties of the recording layer and writes format signals such as servo signals.

This method forms pits 55a and 55b for servo signals on recording tracks 54 formed on the magnetic disk. Format regions 52 and data regions 53 for storing information are formed on the recording tracks 54. The pit regions enable format signals (including tracking servo signals and address signals) to be detected.

This enables the magnetic disk to have stable servo characteristics against changes in the ambient temperature or changes in the temperature of the magnetic disk, which occur when the laser beam is applied to the recording layer during recording or reproduction. The magnetic disk with stable servo characteristics eliminates such problems that the servo characteristics of the magnetic disk change and deteriorate and the recording and reproduction characteristics of the magnetic disk deteriorate accordingly.
The present invention consequently enables the magnetic recording medium to have high heat endurance and good signal characteristics even when signals are reproduced using a magnetic head, such as a GMR head, while the temperature of the recording layer of the magnetic recording medium is being raised through light beam irradiation or the like.

The recording layer of the magnetic disk 50 is irradiated with the laser beam applied through the protective layer, and signals are recorded, reproduced, or detected on the magnetic disk 50 with the magnetic head. This enables small recording marks, which are smaller than marks detectable with the laser light spot used for reproduction, to be recorded and reproduced.

More specifically, to record information on the magnetic recording medium, the disk rotates and the information is recorded with the magnetic head while the laser beam spot is being applied along the tracks. Here, the coercive force of the recording layer decreases at high temperature. With the coercive force decreased, the recording layer allows recording performed with the magnetic head. To reproduce signals, the laser beam is applied to the disk to raise the temperature of the disk. While the disk is being irradiated with the laser beam, recorded magnetic domains are detected with the GMR head. Here, the saturation magnetization Ms increases as the temperature increases, and reaches its maximum value at 100°C. This improves the detection sensitivity of the GMR head, and increases the amount of reproduction signals further.

A method for fabricating the magnetic disk 50 will now be described in detail.
A target is set in a DC magnetron sputtering apparatus, and a disk substrate 51, which is made of transparent glass, is fixed to the substrate holder. Then, the chamber is evacuated with a turbo-molecular pump to create a high vacuum of 8*10⁻⁶ Pa or less in the chamber. While the chamber is being evacuated, Ar gas is introduced into the chamber until the pressure within the chamber becomes 0.2 Pa. While the substrate is being rotated, an under layer, which is made of Zns/SiO₂, is formed by RF magnetron sputtering to have a thickness of 10 nm.

While the chamber is being evacuated, Ar gas is introduced into the chamber until the pressure becomes 2.0 Pa. While the substrate is being rotated, a layer of TbFeCo is formed by DC magnetron sputtering using a TbFeCo alloy as a target. The TbFeCo layer is formed to have a thickness of 80 nm. Here, the composition of the TbFeCo layer can be optimized by adjusting the ratio of the alloy target and the conditions employed to form the layer. For example, the TbFeCo layer, which functions as a recording layer, is formed to have a compensation composition temperature of -40°C and a Curie temperature of 310°C by adjusting the composition of the layer. The recording layer with this composition has such properties that the saturation magnetization Ms increases as the temperature increases and reaches its maximum value at 120°C, and the coercive force He decreases as the temperature reaches and increases above room temperature.

Ar gas and N₂ gas are introduced into the chamber until the pressure within the chamber becomes 0.3 Pa. While the substrate is being rotated, a protective layer 58, which is a dielectric layer of SiN, is formed by reactive sputtering. The protective layer 58 is formed to have a thickness of 2 nm.
A lubrication layer made of DLC is formed on the protective layer 58 by reactive RF sputtering using CVD or using carbon as a target in an atmosphere of a mixture of Ar and CH₄. The DLC layer is formed to have a thickness of 2 nm. PFPE is coated on the DLC layer to form a PFPE lubricating protective layer.
Here, light from a light source such as a YAG laser may be applied through the protective layer 58 to form pits.

In the magnetic recording medium of the present embodiment, the saturation magnetization Ms reaches its maximum value at the temperature of the magnetic recording medium that is being irradiated with light, or more specifically at 100°C. In this case, the recording layer will form even small magnetic domains in a stable manner when such small magnetic domains are recorded on the recording layer, and will have good signal characteristics even in repeated recording and reproduction when such repeated recording and reproduction is performed on the recording layer with the magnetic head.
The track pitch of the magnetic disk 51 is 0.4 µm in the present embodiment. However, the structure in which the width of the grooves on which information is recorded is 0.6 µm or less and the length of the shortest one of the recording marks for recording information in recording domains is 0.3 µm or less would be even more advantageous.

As described above, the structure of the present embodiment enables the magnetic disk to have stable reproduction signal characteristics even in high-density recording and reproduction. Further, the structure of the present embodiment enables the recorded magnetic domains to have stable shapes on the information tracks. This reduces the problems of crosswrite and crosstalk, which occur as a result of interference with adjacent tracks during recording and reproduction.

### Embodiment 6

An embodiment of the present invention will now be described in detail with reference to the drawings.

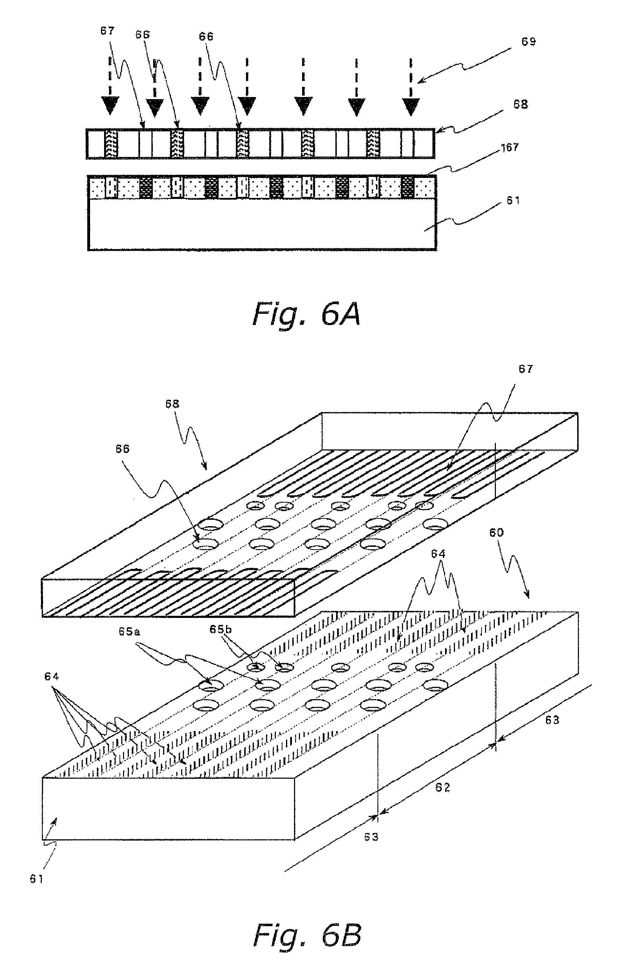

FIG. 6 is a cross-sectional view showing the structure of a magnetic disk in Embodiment 6 of the present invention.
The magnetic disk 60 includes a transparent substrate 61, which is made of glass, on which an under layer, a recording layer, and a protective layer are formed one on top of another in the stated order.
The track pitch of the magnetic disk is 0.35 µm.

The recording layer has such properties that its coercive force He and its saturation magnetization Ms decrease as its temperature T increases.
In this magnetic disk, a mask on which format signals such as servo pits are formed is arranged on the recording layer, and the recording layer of the magnetic recording medium is heated through the mask by irradiating the magnetic recording medium with light. This changes the magnetic anisotropy of the recording layer of the magnetic recording medium to write format signals. The mask also has a pattern for forming guard bands. The pattern for forming guard bands transmits light.

This method forms pits 65a and 65b for servo signals on recording tracks 64 formed on the magnetic disk. Format regions and data regions 63 for storing information are formed on the recording tracks 64. The pit regions enable format signals (including tracking servo signals and address signals) to be detected.
This method eliminates such problems with the conventional recording media that the servo characteristics of the magnetic disk change and deteriorate when the temperature of the magnetic disk is raised by irradiating the recording layer and the laser beam and the recording and reproduction characteristics of the magnetic disk deteriorate according to the fluctuation of the servo signals.

The magnetic recording medium includes a protective layer 68 for formatting at the recording layer side of the magnetic recording medium. The protective layer 68 is masked according to formation regions of servo pits. The magnetic recording medium is irradiated with light 69 and heated to change the magnetic properties of the recording layer and form format signals such as servo signals. The mask used here also has the pattern corresponding to guard bands 64. The region of the mask corresponding to the format signals, and the region of the mask corresponding to the guard bands, and the remaining regions differ from one another in light transmittance. The region of the mask corresponding to the guard bands has a high light transmittance.

With this structure, the region of the mask corresponding to the guard bands will have the largest degree of change in the magnetic anisotropy. This enables domain walls of the readout layer to displace easily during reproduction performed using DWDD. As a result, magnetic domains are expanded and the expanded magnetic domains are reproduced. The region of the mask corresponding to the format signals also has a relatively high light transmittance. This enables servo signals or the like to be formed.

The magnetic disk with the above-described structure allows a servo signal to be detected based on a change in the magnetic properties of the recording layer. This enables the magnetic disk to have stable servo characteristics against changes in the ambient temperature or changes in the temperature of the magnetic disk, which occur when the laser beam is applied to the recording layer during recording or reproduction. The present invention consequently enables the magnetic recording medium to have high heat endurance and good signal characteristics even when signals are reproduced using a magnetic head, such as a GMR head, while the temperature of the recording layer of the magnetic recording medium is being raised through light beam irradiation or the like.

In the present embodiment, the guard bands can be formed altogether through annealing. Thus, the manufacturing method for the magnetic recording medium features high productivity and low cost.

The recording layer of the magnetic recording medium 60 is irradiated with a laser beam applied through the protective layer near the recording layer, and signals are recorded, reproduced, or detected with the magnetic head. This enables small recording marks, which are smaller than marks detectable with the laser light spot used for reproduction, to be recorded and reproduced.

To record information on the magnetic recording medium, the disk rotates and the information is recorded with the magnetic head while the laser beam spot is being applied along the tracks. Here, the coercive force of the recording layer decreases at high temperature. With the coercive force decreased, the recording layer allows recording performed with the magnetic head. To reproduce signals, the laser beam is applied to the disk to raise the temperature of the disk. While the disk is being irradiated with the laser beam, recorded magnetic domains are detected with the GMR head. Here, the saturation magnetization Ms increases as the temperature increases, and reaches its maximum value at 110°C. This improves the detection sensitivity of the GMR head, and increases the amount of reproduction signals further.

A method for fabricating the magnetic disk 60 will now be described in detail.
A surface of a substrate 61 is smoothed by etching through plasma irradiation performed using an ion gun, and impurities are removed from the surface.

A target is set in a DC magnetron sputtering apparatus, and the disk substrate 61 is fixed to the substrate holder. Then, the chamber is evacuated with a turbo-molecular pump to create a high vacuum of 8*10⁻⁶ Pa or less in the chamber. While the chamber is being evacuated, Ar gas is introduced into the chamber until the pressure within the chamber becomes 0.4 Pa. While the substrate is being rotated, a metal layer made of AgCu, which functions as a dielectric under layer, is formed by DC magnetron sputtering. The dielectric under layer is formed to have a thickness of 6 nm.

While the chamber is being evacuated, Ar gas is introduced into the chamber until the pressure becomes 1.8 Pa. While the substrate is being rotated, a recording layer, which is a layer of TbFeCo, is formed by DC magnetron sputtering using a TbFeCo alloy as a target. The recording layer is formed to have a thickness of 50 nm. Here, the composition of the TbFeCo layer can be optimized by adjusting the ratio of the alloy target and the conditions employed to form the layer. For example, the TbFeCo layer, which functions as a recording layer, is formed to have a compensation composition temperature of -70°C and a Curie temperature of 320°C by adjusting the composition of the layer.

Ar gas and N₂ gas are introduced into the chamber until the pressure within the chamber becomes 0.3 Pa. While the substrate is being rotated, a protective layer, which is a dielectric layer of SiN, is formed by reactive sputtering. The protective layer is formed to have a thickness of 2 nm. A protective layer, which is made of DLC, is formed on the protective layer by reactive RF sputtering using CVD or using carbon as a target in an atmosphere of a mixture of Ar and CH₄. The protective layer is formed to have a thickness of 3 nm.

Here, the surface of the protective layer is etched to have a surface roughness Ra of 0.7 nm or greater. PFPE is coated on the protective layer to form a PFPE lubricating layer.
As described above, concaves and convexes with a large surface roughness are formed on the surface of the protective layer. This prevents the magnetic head from adhering to the surface of the protective layer. As a result, the protective layer improves sliding performance and levitating performance of the magnetic head.
The recording layer with this composition has such properties that the saturation magnetization Ms increases as the temperature increases and reaches its maximum value at 110°C and the coercive force Hc decreases as the temperature reaches and increases above room temperature.

In the magnetic recording medium of the present embodiment, the saturation magnetization Ms reaches its maximum value at the temperature of the magnetic recording medium that is being irradiated with light, or more specifically at 110°C. In this case, the recording layer will form even small magnetic domains in a stable manner when such small magnetic domains are recorded on the recording layer, and will have good signal characteristics even in repeated recording and reproduction when such repeated recording and reproduction is performed on the recording layer with the magnetic head.
The track pitch of the magnetic disk is 0.4 µm in the present embodiment. However, the structure in which the width of the grooves on which information is recorded is 0.6 µm or less and the length of the shortest one of the recording marks for recording information in recording domains is 0.3 µm or less would be even more advantageous.

As described above, the structure of the present embodiment enables the magnetic disk to have stable reproduction signal characteristics even in high-density recording and reproduction. Further, the structure of the present embodiment enables the recorded magnetic domains to have stable shapes on the information tracks. This reduces the problems of crosswrite and crosstalk, which occur as a result of interference with adjacent tracks during recording and reproduction.

### Embodiment 7

An embodiment of the present invention will now be described in detail with reference to the drawings.

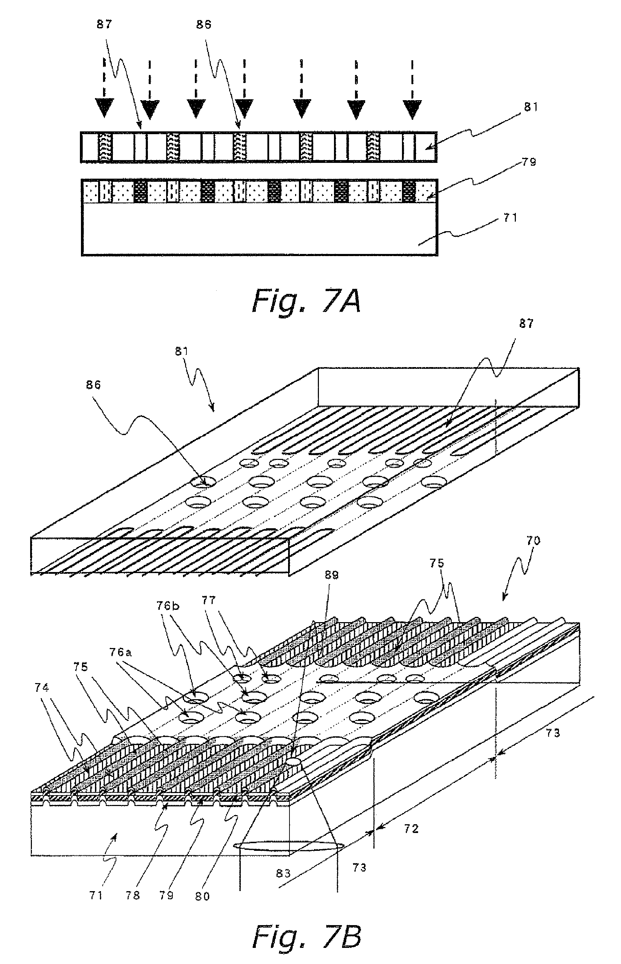

FIG. 7A is a cross-sectional view showing the structure of a magnetic disk in Embodiment 7 of the present invention, and FIG. 7B is a perspective view showing the structure of the magnetic disk.
The magnetic disk includes a transparent substrate 71, which is made of glass, on which an under layer (e.g. a dielectric layer), a recording layer, and a protective layer are formed one on top of another in the stated order. This magnetic disk is usable with an apparatus including an optical head 83 that includes an objective lens for irradiating the magnetic disk with light.

The recording layer is formed by a magnetic thin film, and has such properties that its coercive force Hc and its saturation magnetization Ms decrease as its temperature T increases. The track pitch of the magnetic disk is 0.3 µm.
The magnetic recording medium is irradiated with a laser beam through the protective layer and allows signals to be recorded, reproduced, and detected with a magnetic head. This enables small recording marks, which are smaller than marks detectable with the laser light spot used for reproduction, to be recorded and reproduced.

A mask 81 on which format signals such as servo pits are formed is arranged on the recording layer side surface of the magnetic recording medium, and the recording layer of the magnetic recording medium is heated through the mask 81 through light irradiation. This changes the magnetic properties or specifically the magnetic anisotropy of the recording layer of the magnetic recording medium to write format signals such as servo signals. The mask 81 also has a pattern for forming guard bands. The pattern for forming guard bands transmits light.

With this method, pits 76a, 76b, and 77 for servo signals are formed on recording tracks formed on the magnetic disk. Format regions and data regions 73 for storing information are formed on the recording tracks. The pit regions enable format signals (including tracking servo signals and address signals) to be detected.
This eliminates such problems with the conventional recording medium that the servo characteristics of the magnetic disk change and deteriorate when the temperature of the magnetic disk is raised by irradiating the recording layer with the laser beam and the recording and reproduction characteristics of the recording medium deteriorate accordingly.

This enables the magnetic recording medium to have stable servo characteristics against changes in the ambient temperature or changes in the temperature of the magnetic recording medium, which occur when the laser beam is applied to the recording layer during recording or reproduction. The present invention consequently enables the magnetic recording medium to have high heat endurance and good signal characteristics even when signals are reproduced using the magnetic head 89, such as a GMR head, while the temperature of the recording layer of the magnetic recording medium is being raised through light beam irradiation or the like.

Guard bands are further formed on the magnetic recording medium. A protective layer formed in the guard band regions differs in light transmittance from a protective layer formed on the pits for formatting.
In this case, format signals and guard bands can be formed altogether on the magnetic medium simultaneously.

To record information on the magnetic recording medium of the present embodiment, the disk rotates and the information is recorded with the magnetic head while the laser beam spot is being applied along the tracks. Here, the coercive force of the recording layer decreases at high temperature. With the coercive force decreased, the recording layer allows recording performed with the magnetic head. To reproduce signals, the laser beam is applied to the disk to raise the temperature of the disk. While the disk is being irradiated with the laser beam, recorded magnetic domains are detected with the GMR head. Here, the saturation magnetization Ms increases as the temperature increases, and reaches its maximum value at 110°C. This improves the detection sensitivity of the GMR head, and increases the amount of reproduction signals further.

A method for fabricating the magnetic disk 70 will now be described in detail.
A substrate 71, having grooves formed on recording tracks and format signals formed using concaves and convexes in format signal regions, is prepared.

A target is set in a DC magnetron sputtering apparatus, and the disk substrate is fixed to the substrate holder. Then, the chamber is evacuated with a turbo-molecular pump to create a high vacuum of 8*10⁻⁶ Pa or less in the chamber. While the chamber is being evacuated, Ar gas is introduced into the chamber until the pressure within the chamber becomes 0.2 Pa. While the substrate is being rotated, a dielectric under layer 78, which is made of ZnSSiO₂, is formed on the disk substrate 71 by RF magnetron sputtering. The dielectric under layer 78 is formed to have a thickness of 10 nm.

While the chamber is being evacuated, Ar gas is introduced into the chamber until the pressure becomes 2.0 Pa. While the substrate is being rotated, a recording layer, which is a layer of TbFeCo, is formed by DC magnetron sputtering using a TbFeCo alloy as a target. The recording layer is formed to have a thickness of 80 nm. Here, the composition of the TbFeCo layer can be optimized by adjusting the ratio of the alloy target and the conditions employed to form the layer. For example, the TbFeCo layer, which functions as a recording layer, is formed to have a compensation composition temperature of -40°C and a Curie temperature of 310°C by adjusting the composition of the layer. In this case, the recording layer has such properties that the saturation magnetization Ms increases as the temperature increases and reaches its maximum value at 120°C and the coercive force He decreases as the temperature reaches and increases above room temperature.

Ar gas and N₂ gas are introduced into the chamber until the pressure within the chamber becomes 0.3 Pa. While the substrate is being rotated, a protective layer 80, which is a dielectric layer of SiN, is formed by reactive sputtering. The protective layer 80 is formed to have a thickness of 2 nm.
A solid lubricating layer, which is made of DLC, is formed on the protective layer 80 by reactive RF sputtering using CVD or using carbon as a target in an atmosphere of a mixture of Ar and CH₄. The DLC layer is formed to have a thickness of 2 nm. PFPE is coated on the DLC layer to form a PFPE lubricating layer, which functions as a protective layer.

In the magnetic recording medium of the present embodiment, the saturation magnetization Ms reaches its maximum value at the temperature of the magnetic recording medium that is being irradiated with light, or more specifically at 120°C. In this case, the recording layer will form even small magnetic domains in a stable manner when such small magnetic domains are recorded on the recording layer, and will have good signal characteristics even in repeated recording and reproduction when such repeated recording and reproduction is performed on the recording layer with the magnetic head.

The track pitch of the magnetic disk 71 is 0.3 µm in the present embodiment. However, the structure in which the width of the grooves on which information is recorded is 0.6 µm or less and the length of the shortest one of the recording marks for recording information in recording domains is 0.3 µm or less would be even more advantageous. The structure in which the groove width is 0.2 µm or less would be still more advantageous.

The structure of the present embodiment enables the magnetic disk to have stable reproduction signal characteristics even in high-density recording and reproduction. Further, the structure of the present embodiment enables the recorded magnetic domains to have stable shapes on the information tracks. This reduces the problems of crosswrite and crosstalk, which occur as a result of interference with adjacent tracks during recording and reproduction.

### Embodiment 8

An embodiment of the present invention will now be described in detail with reference to the drawings.

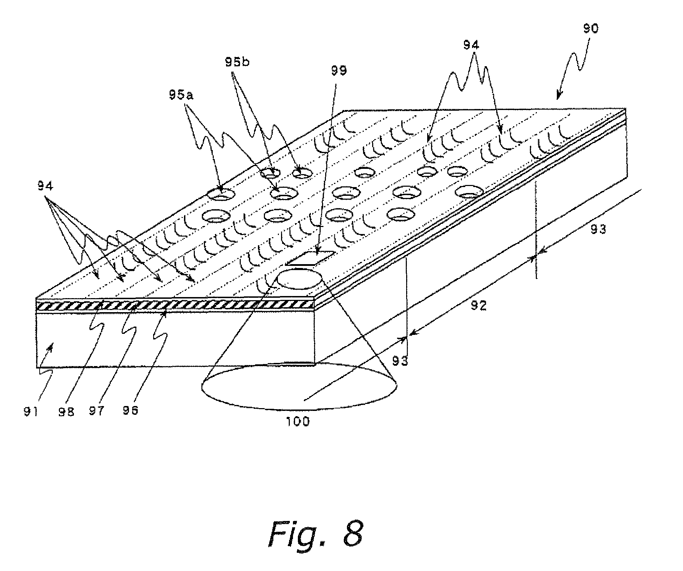

FIG. 8 is a perspective view showing the structure of a magnetic disk in Embodiment 8 of the present invention.
The magnetic disk 90 includes a substrate 91, on which an under layer, a recording layer, and a protective layer are formed one on top of another in the stated order. The protective layer protects the recording layer and enables a magnetic head 99 to be slidable thereon.

The recording layer is formed by a magnetic thin film, and has such properties that its coercive force Hc and its saturation magnetization Ms decrease as its temperature T increases. The track pitch of the magnetic disk is 0.4 µm. A minute concave-and-convex pattern 94 is formed on recording tracks of the recording layer. The concaves and convexes of the pattern 94 are smaller than recording marks.
This magnetic disk is usable with an apparatus including an optical head that includes an objective lens 100 for irradiating the magnetic disk with light.

A mask on which format signals such as servo pits are formed is arranged on the recording layer. The recording layer of the magnetic recording medium is heated through the mask by irradiating the magnetic recording medium with light. This changes the magnetic anisotropy of the recording layer of the magnetic recording medium to write format signals. The mask also has a pattern for forming guard bands. The pattern for forming guard bands transmits light.
With this method, pits 95a and 95b, which are used to detect servo signals and address information, are formed on the recording tracks. Format regions containing these signals and data regions 93 for storing information are formed on the magnetic disk.

In particular, the recording layer is patterned by heating the recording layer through the mask. Thus, format signals and guard band information are formed easily without being affected by the pattern of minute concaves and convexes. These mask patterns use microfabrication technology, and enable high-density recording. More specifically, the minute concave-and-convex pattern 94, which includes the concaves and concaves smaller than the recording marks, is formed on the recording tracks. Thus, even when small marks are recorded on the recording layer, the domain walls of the recording domains of the recording layer do not displace. This enables high-density recording.

These pit regions enable format signals (e.g. tracking servo signals and address signals) to be detected while servo is being performed.
This eliminates such problems with the conventional recording medium that the servo characteristics of the magnetic disk change and deteriorate when the temperature of the magnetic disk is raised by irradiating the recording layer with the laser beam and the recording and reproduction characteristics of the recording medium deteriorate accordingly.

More specifically, the mask for formatting, which is patterned according to formation regions of servo pits, is arranged on the recording layer side surface of the magnetic recording medium. The magnetic recording medium is heated through the mask through light irradiation. This changes the magnetic properties of the recording layer to form format signals such as servo signals. This enables the magnetic disk to have stable servo characteristics against changes in the ambient temperature or changes in the temperature of the magnetic disk, which occur when the laser beam is applied to the recording layer during recording or reproduction. The present invention consequently enables the magnetic recording medium to have high heat endurance and good signal characteristics even when signals are reproduced using the magnetic head, such as a GMR head, while the temperature of the recording layer of the magnetic recording medium is being raised through light beam irradiation or the like.

The magnetic recording medium is irradiated with a laser beam applied through the protective layer, and signals are recorded, reproduced, or detected on the magnetic recording medium with the magnetic head. This enables small recording marks, which are smaller than marks detectable with the laser light spot used for reproduction, to be recorded and reproduced.

To record information on the magnetic recording medium of the present embodiment, the disk rotates and the information is recorded with the magnetic head while the laser beam spot is being applied along the tracks. Here, the coercive force of the recording layer decreases at high temperature. With the coercive force decreased, the recording layer allows recording performed with the magnetic head. To reproduce signals, the laser beam is applied to the disk to raise the temperature of the disk. While the disk is being irradiated with the laser beam, recorded magnetic domains are detected with the GMR head. Here, the saturation magnetization Ms increases as the temperature increases, and reaches its maximum value at 120°C. This improves the detection sensitivity of the GMR head, and increases the amount of reproduction signals further.

A method for fabricating the magnetic disk 90 will now be described in detail.
As shown in FIG. 8, a target is set in a DC magnetron sputtering apparatus, and a disk substrate 91, which is made of transparent glass, is fixed to the substrate holder. Then, the chamber is evacuated with a turbo-molecular pump to create a high vacuum of 8*10⁻⁶ Pa or less in the chamber. While the chamber is being evacuated, Ar gas is introduced into the chamber until the pressure within the chamber becomes 0.2 Pa. While the substrate is being rotated, a dielectric under layer 96, which is made of ZnSSiO₂, is formed on the disk substrate 91 by RF magnetron sputtering. The dielectric under layer 96 is formed to have a thickness of 10 nm.

While the chamber is being evacuated, Ar gas is introduced into the chamber until the pressure becomes 2.0 Pa. While the substrate is being rotated, a recording layer, which is a layer of TbFeCo, is formed by DC magnetron sputtering using a TbFeCo alloy as a target. The recording layer is formed to have a thickness of 80 nm. Here, the composition of the TbFeCo layer can be optimized by adjusting the ratio of the alloy target and the conditions employed to form the layer.

Ar gas and N₂ gas are introduced into the chamber until the pressure within the chamber becomes 0.3 Pa. While the substrate is being rotated, a protective layer 98, which is a dielectric layer of SiN, is formed by reactive sputtering using Si as a target. The protective layer 98 is formed to have a thickness of 2 nm.

A solid lubricating protective layer, which is made of DLC, is formed on the protective layer 98 by reactive RF sputtering using CVD or using carbon as a target in an atmosphere of a mixture of Ar and CH₄. The DLC layer is formed to have a thickness of 2 nm. PFPE is coated on the DLC layer to form a PFPE layer, which functions as a lubricating protective layer.

Here, a magnetic layer group 97, which is made of TbFeCo, is formed to have a compensation composition temperature of -40°C and a Curie temperature of 310°C by adjusting its composition.
As a result, the recording layer has such properties that its saturation magnetization Ms increases as the temperature increases and reaches its maximum value at 120°C and its coercive force H decreases as the temperature reaches and increases above room temperature.

In the magnetic recording medium of the present embodiment, the saturation magnetization Ms reaches its maximum value at the temperature of the magnetic recording medium that is being irradiated with light, or more specifically at 120°C. In this case, the recording layer will form even small magnetic domains in a stable manner when such small magnetic domains are recorded on the recording layer, and will have good signal characteristics even in repeated recording and reproduction when such repeated recording and reproduction is performed on the recording layer with the magnetic head.

The track pitch of the magnetic disk is 0.4 µm in the present embodiment. However, the structure in which the width of the grooves on which information is recorded is 0.6 µm or less and the length of the shortest one of the recording marks for recording information in recording domains is 0.3 µm or less would be even more advantageous.

Although the present embodiment describes the structure in which the minute concave-and-convex pattern 94 including concaves and convexes smaller than the recording marks is formed on the recording tracks, a pattern of concaves and convexes having a length corresponding to the recording marks, a pattern of concaves and convexes corresponding to the length of the shortest one of the recording marks, a pattern of convexes and convexes corresponding to the domain walls of the recording marks, or a pattern of concaves and convexes having a cycle smaller than the cycle of the recording marks may be formed on the recording tracks. This structure enables the magnetic recording medium and the recording method for the magnetic recording medium to stabilize the small recording marks and to form format signals for high-density recording.

As described above, the structure of the present embodiment enables the magnetic recording medium to have stable reproduction signal characteristics even in high-density recording and reproduction. Further, the structure of the present embodiment enables the recorded magnetic domains to have stable shapes on the information tracks. This reduces the problems of crosswrite and crosstalk, which occur as a result of interference with adjacent tracks during recording and reproduction.

### Embodiment 9

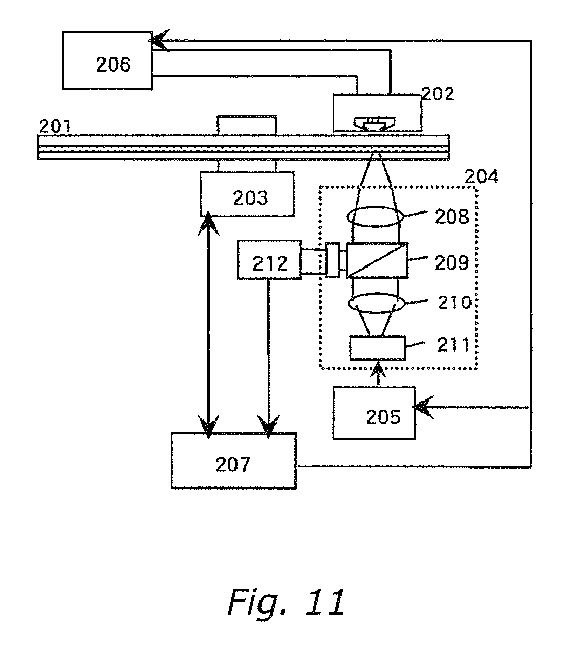

The structure of the recording and reproducing apparatus for the magnetic recording medium of the present invention will now be described.
As shown in FIG. 11, the recording and reproducing apparatus at least includes a magnetic recording medium 201, a magnetic head 202, and a spindle motor 203. The magnetic head 202 includes a means for detecting a format signal on the magnetic recording medium 201, a means for reading a data signal from the magnetic recording medium 201, and a means for writing a data signal to the magnetic recording medium 201.

The magnetic head 202 is connected to a magnetic head control and detection circuit 206, and is controlled by the magnetic head control and detection circuit 206.
The spindle motor 203 is connected to a motor drive and control circuit 207, and is controlled by the motor drive and control circuit 207.

The recording and reproducing apparatus further includes an optical head 204, which is arranged at a position facing the magnetic recording medium 201. The optical head 204 is composed of optical elements 208, 209, 210, and 211, which are selected from a laser, a photodetector, a prism, a collimator lens, an objective lens, and a hologram element. The optical head 204 is connected to a laser drive circuit 205, and is controlled by the laser drive circuit 205. Further, the optical head 204 is connected to a photodetector 212. Here, the optical head 204 may be arranged at the same side as the magnetic head.

The recording and reproducing apparatus with this structure records and reproduces signals on and from the magnetic disk 201, which is attached to the spindle motor 203, using the magnetic head 202, which is controlled by the magnetic head control and detection circuit 206. While the optical head 204 is irradiating the disk with laser light, which is controlled by the laser drive circuit 205, recording and reproduction is performed using the magnetic head 202. In this state, the motor drive and control circuit 207 controls the spindle motor 203. For example, the motor drive and control circuit 207 executes motor rotation drive control and laser light servo control over the spindle motor 203. Light reflected at the optical head 204 is detected by the photodetector 212 and is used for focus servo control and tracking servo control.

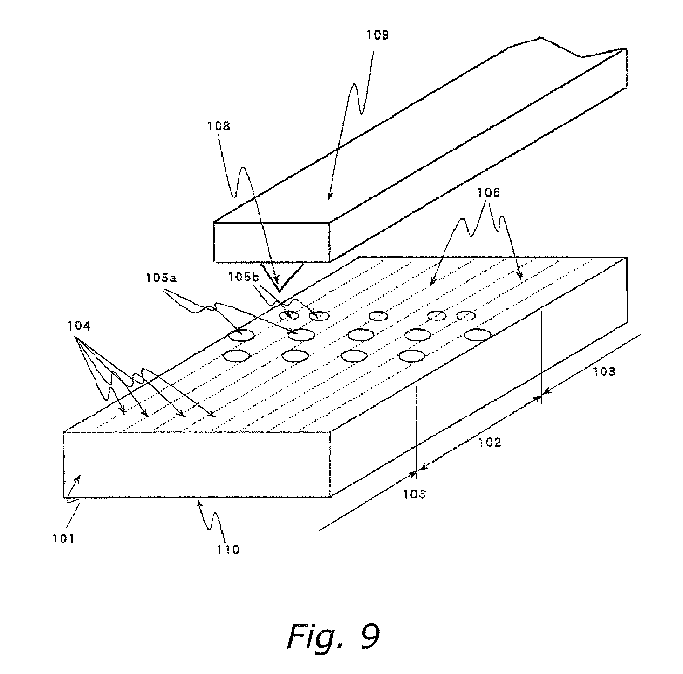

The recording and reproducing apparatus shown in FIG. 11 may include a probe array that includes a probe on its tip, which is for example shown in FIG. 9 or FIG. 10, instead of the magnetic head and/or the optical head or in addition to the magnetic head and/or the optical head. The probe is capable of applying a magnetic field and/or heat to the recording medium. More specifically, the probe includes a coil for generating a magnetic field and/or a heater for heating the magnetic recording medium. The probe is supported in a manner that the probe scans the magnetic recording medium while facing the surface of the magnetic recording medium at a predetermined distance from the magnetic recording medium surface, or contacting the magnetic recording medium surface, or tapping the magnetic recording medium surface.

The recording and reproducing apparatus with this structure enables format signals and/or data to be recorded on and reproduced from the magnetic disk. More specifically, the recording and reproducing apparatus forms pits for format signals on the magnetic disk by recording the pits on the magnetic disk with the probe or by irradiating the magnetic disk with light through a mask. To format the magnetic disk, the recording and reproducing apparatus detects tracking servo signals and address signals based on signals from the pits, and records servo signals on the disk using the pits as references. Further, the recording and reproducing apparatus records and reproduces data based on format signals (e.g. pits, or pits formed using regions that differ from other regions in surface roughness) while performing tracking servo.

This recording and reproducing apparatus detects servo signals in a stable manner even when such signals are recorded or reproduced at high density. Consequently, the recording and reproducing apparatus has high recording and reproduction signal characteristics. Further, this recording and reproducing apparatus enables recorded magnetic domains to have stable shapes on the information tracks. This reduces the problems of crosswrite and crosstalk, which may occur as a result of interference with adjacent tracks during recording and reproduction.

### Other Embodiments

The material for the substrate may be glass, metal, or plastic, or any other material. The substrate may have a flat surface, a surface on which convexes and concaves are formed by pits or grooves, a surface having guide grooves in which pits are formed, or a directly etched surface. The substrate may have any other surface structure as long as a recording layer can be formed on the substrate.
The track pitch of the recording tracks of the substrate should not be limited to values in the range of 0.25 to 0.4 µm, but may be set at any value as long as the width of the grooves on which information is recorded is 0.6 µm or less and the length of the shortest one of the recording marks for recording information in recording domains is 0.3 µm or less. The structure of the present invention would be even more advantageous when the recording track density or the track recording density is small.

The depth of the pits should not be limited to any particular value as long as signals from pits for tracking servo and pits for address detection are detectable with the magnetic head. For example, the depth of the pits may be in a range of 10 to 200 nm.
The magnetic disk may include a heat absorbing layer with a large heat conductivity between the substrate and the under layer, and may further have a layer with a small heat conductivity between the substrate and the under layer. This structure controls the temperature distribution and the heat conductivity between different parts of the disk.

Although the above embodiments describe the case in which the recording layer has either a single-layer structure or a multilayer structure that uses magnetically induced superresolution, the recording layer may have any structure as long as the recording layer is a laminated magnetic recording layer including a memory layer for storing information. For example, the recording layer may be composed of a readout layer and a memory layer that are structured to increase the amount of signals containing reproduction information, and the two layers may be magnetically exchange-coupled to each other. The recording layer should not be limited to the three-layer structure of the memory layer, the intermediate layer, and the readout layer, and may be composed of any number of multiple layers that have necessary functions.
The material for the recording layer should not be limited to any particular material. For example, the memory layer of the recording layer may be a magnetic layer made of an alloy of a rare earth metal and a transition metal. More specifically, the memory layer may be a magnetic thin film that is formed from a material containing a rare earth metal selecting from the group including Tb, Gd, Dy, Nd, and Ho and a transition metal selecting from the group including Fe, Co, and Ni.

The readout layer may be a layer of GdFeCoAl, or may be a layer with another material composition, or may be a laminate of these.
Further, the TbFeCo recording layer may be formed by periodically laminating Tb and the transmission metals Fe and Co by means of controlling the film formation rate and the rotation speed of the optical disk substrate. The period of lamination of this periodically laminated structure is set at 2.0 nm or less. This increases the value of MsHc, which is the product of the saturation magnetization Ms and the coercive force He of the recording layer. When the recording layer of the above embodiment is formed with the lamination period of 1.0 nm, the recording layer achieves a large MsHc value of 4.0*10⁶ erg/cm³. In this case, the recording layer will form even small magnetic domains of 50 nm or less in a stable manner when such small magnetic domains are recorded on the recording layer, and will have good signal characteristics even in repeated recording and reproduction when such repeated recording and reproduction is performed on the recording layer.

The recording layer should not be limited to the periodically laminated structure of Tb and FeCo with the lamination period of 2.0 nm or less. When the recording layer has a periodically laminated structure with a lamination period of 0.3 nm or greater and 4.0 nm or less and the recording layer has a thickness or 20 nm or greater or preferably in a range of 40 to 200 nm, the recording layer will have the same advantages as the recording layer described in each of the above embodiments.
Further, the recording layer should not be limited to the periodically laminated structure of Tb and the transition metals Fe and Co. The recording layer may be formed using targets different from Tb, Fe, and Co, or targets including other materials as long as the recording layer has a periodically laminated structure with a lamination period of 2 nm or less.
Although the above embodiments describe the case in which the TbFeCo recording layer is formed to have a Curie temperature set in a range of 290 and 320°C, the Curie temperature may be set in other temperatures ranges according to the properties of the magnetic head, the conditions employed for the temperature increase performed with the optical head, and the permissible range of ambient temperatures. In this case, the Curie temperature is required to be at least 150°C.

In the process of forming the TbFeCo recording layer, a noncrystalline magnetic thin film having a large magnetic anisotropy may be used. In this case, the microstructure of the Tb and FeCo layers can be changed by controlling the film formation rate and the rotation speed of the optical disk substrate. In detail, to form the TbFeCo recording layer with the above film structure, particles of each of these elements are applied at the film formation rate of 0.5 nm/sec while the disk substrate is rotating at the speed of 40 rpm.

As described above, the structure described in each of the above embodiments enables information recorded on the recording layer to be detected with the magnetic head in a stable manner even when the recording layer has the three-layer structure of the memory layer, the intermediate layer, and the readout layer. The structure described in each of the above embodiments enables the magnetic recording medium to have stable reproduction signal characteristics even in high-density recording and reproduction.
As a result, the magnetic recording medium of the present invention includes the recording layer on which recording information is rewritable, which is composed of the memory layer, the intermediate layer, and the readout layer formed one on top of another, and further includes the protective layer, which functions as a lubricating layer, formed on the recording layer via the heat insulating layer. The magnetic recording medium with this structure has a track pitch of 0.6 µm or less. The magnetic recording medium enables small magnetic domains of 0.3 µm or less to be formed in a stable manner, and increases the amount of reproduction signals that have been transferred onto the readout layer. Further, the magnetic recording medium of the present invention enables the recorded magnetic domains to have stable shapes on the information tracks. This reduces the problems of crosswrite and crosstalk, which occur as a result of interference with adjacent tracks during recording and reproduction.

Although the above embodiments describe the case in which the magnetic disk uses magnetically induced superresolution enabled by means of DWDD and has the film structure composed of the readout layer, the intermediate layer, and the memory layer, the present invention should not be limited to this structure. The magnetic disk may have a film structure in which transferred magnetic domains are expanded and reproduced using other technologies, such as RAD (rear aperture detection), FAD (front aperture detection), CAD (center aperture detection), double-mask magnetically induced superresolution, and MAMMOS (magnetic amplifying magneto-optical system).
Although the above embodiments describe the case in which the recording layer is formed by sputtering performed in an Ar gas environment, inert gases, such as Ne, Kr, and Xe, may be used instead of the Ar gas. Further, the environment of such gases may contain other elements, such as H₂.

Although the above embodiments describe the case in which the recording and reproducing method for the magnetic recording medium using the probe is implemented to write format signals and guard bands, the recording and reproducing method may record and reproduce data signals representing main data using the probe or using the probe array that includes a plurality of probes. This method also enables repeated recording and reproduction as well as high density, high transfer rate recording and reproduction.

The data signals representing main data may be recorded or reproduced with the recording and reproducing method for the magnetic recording medium of the above embodiments that changes the magnetic anisotropy of the magnetic recording medium or forms an oxidation film, that is, the method using the probe or the method using annealing through the mask. This method is applicable to a write-once magnetic recording medium and a recording and reproducing method for the write-once magnetic recording medium. This enables high density, high transfer rate recording of main data on the write-once magnetic recording medium.

Although the above embodiments describe the case in which the magnetic disk includes the disk substrate on which concaves and convexes using pits are formed, pits that differ from other regions in surface roughness are formed, or grooves are formed, the disk substrate may have grooves or lands that separate the recording tracks from one another. Alternatively, the grooves or the lands may be used as guide grooves for annealing between the tracks. This structure magnetically separates tracks, on which information is recorded, from one another. As a result, the domain walls of the recorded magnetic domains, which have been transferred to the readout layer, displace easily. This structure enables the magnetic disk to have even higher signal characteristics when DWDD described above is used.

As described above, the concaves and convexes formed by the grooves or the lands or the minute concaves and convexes corresponding to the recording patterns easily separate the recording tracks from one another. As a result, small magnetic domains of 0.1 µm or smaller are formed in a stable manner. The domain walls of the transferred magnetic domains displace with high mobility when DWDD is used. This enables the magnetic disk to have high reproduction signal characteristics. This further reduces the problems of crosswrite and crosstalk, which occur as a result of interference with adjacent tracks during recording and reproduction.
Although the above embodiments describe the case in which the disk substrate surface is processed by texturing, the disk substrate surface may be subjected to other processing, such as polishing and surface finishing. Alternatively, the surface of the magnetic recording medium may for example be polished or may be subjected to surface finish processing after the recording layer is formed.

Examples of the materials for the under layer include SiN, AlTiN, ZnSSiO₂, TaO, AlTi, and AgCu, oxides or nitrides of Cr, Ti, and Ta or other elements, II-VI compounds and III-V compounds such as chalcogen compounds, metals such as Al, Cu, Ag, Au, and Pt, and mixed materials combining some of these. The under layer may have a single-layer or multilayer structure of these materials.

The protective layer may be formed from the same materials as the materials for the under layer. The protective layer may have a single-layer or multilayer structure of these materials.
Although the above embodiments describe the case in which the protective layer is formed by forming the DLC solid lubricating layer by reactive RF sputtering using carbon as a target performed in an atmosphere of a mixture of Ar and CH₄, the protective layer may be a DLC layer that is formed by other methods, such as CVD. In this case, the protective layer can be formed more densely. Although the above embodiments describe the case in which the lubricating protective layer of PETF is coated, the PETF layer may be formed through spin coating, dipping, or other methods.

Alternatively, the protective layer may be formed by coating a layer of epoxy-acrylic resin or urethane resin to have a uniform thickness of about 5 µm with spin coating, and curing the layer with ultraviolet light applied from a UV lamp.
The magnetic medium of the present invention may further be burnished using tapes. The tape-burnishing process removes foreign matter, protrusions, or the like on the surface of the magnetic medium without damaging the surface of the magnetic medium. In this case, a protective layer can be coated uniformly to extend from the inner periphery to the outer periphery of the magnetic recording layer with a film thickness distribution of as small as 7 µm ± 1 µm.

The disk substrate may be of a type in which double-sided recording and reproduction is possible. In this case, servo pits are formed on the two sides of the disk, and a recording layer and a protective layer need to be formed on each of the two sides of the disk substrate. Further, the recording and reproducing apparatus is required to have a drive structure in which magnetic heads are attached to face the two recording layer surfaces of the disk.
After the layers are formed on each of the two sides of the disk, the surfaces of the disk may be set on a tape burnishing apparatus. While the disk is being rotated, the disk surfaces may be subjected to a tape-burnishing process performed from its inner periphery to its outer periphery to remove foreign matter, protrusions, and the like from the surfaces.

The changes in the magnetic properties of the recording layer of the present invention referred to herein mean changes that are caused by changes in the substrate or the under layer. More specifically, the magnetic properties include the coercive force, the saturation magnetization, the magnetic flux density, and the magnetic anisotropy or temperature characteristics of these. The magnetic properties may further include any other properties as long as their changes are detectable by the magnetic head. This structure will have the same advantages as the structure described in each of the above embodiments.

As described above, the magnetic recording medium of the present invention performs magnetic recording and reproduction, and has the structure in which at least the recording layer magnetized in a direction perpendicular to the plane is formed on the disk substrate. The magnetic recording medium of the present invention allows servo signals to be formed thereon using regions that differ from other regions in the magnetization, the magnetic anisotropy, and the film oxidation or allows servo signals to be formed thereon using pits. The magnetic recording medium allows such servo signals to be formed by the probe array, which uses a cantilever, being arranged near the recording layer or being arranged in contact with the recording layer formed on the disk substrate, or allows such servo signals to be formed by light being applied through the mask patterned according to an information signal to be recorded. This improves the signal characteristics of the magnetic recording medium, and enables the magnetic recording medium to have good tracking characteristics and good signal characteristics.

This structure significantly improves the productivity of the disk and significantly reduces the cost of the disk, and enables the magnetic recording medium to have good characteristics including stable servo characteristics.
The magnetic recording and reproduction of the magnetic recording medium is performed while the temperature of the recording layer is being raised through light irradiation. This magnetic recording medium improves the stability and the reliability of the servo signals when the regions of the recording layer that differ from other regions in their surface roughness are pits forming concaves or convexes. This enables the magnetic recording medium and the manufacturing method and the recording and reproducing method for the magnetic recording medium to achieve good signal characteristics even in high-density recording and reproduction.

### INDUSTRIAL APPLICABILITY

The magnetic recording medium of the present invention enables high-density recording of information, and is applicable to a wide range of recording media including an information storage device and a memory medium.

## Claims

1. A recording and reproducing method for a magnetic recording medium using at least one probe array that includes a probe arranged to face the magnetic recording medium so as to scan the magnetic recording medium, comprising:
recording a format signal on the magnetic recording medium and/or detecting a format signal on the magnetic recording medium; and
recording, reproducing, and/or erasing data on the magnetic recording medium using the at least one probe array.

2. The recording and reproducing method according to Claim 1, wherein the probe has a means for generating a magnetic field and/or a means for heating the magnetic recording medium on a tip thereof.

3. The recording and reproducing method according to any one of Claims I and 2, wherein the format signal is recorded and/or detected by changing a magnetization direction of the magnetic recording medium using a magnetic field that is applied from the probe.

4. The recording and reproducing method according to any one of Claims 1 to 3, wherein the data is recorded, reproduced, and/or erased by changing a magnetization direction of the magnetic recording medium using a magnetic field that is applied from the probe.

5. The recording and reproducing method according to any one of Claims 1 to 4, wherein the data is recorded, reproduced, and/or erased by changing one of a magnetization direction and a magnetic anisotropy of the magnetic recording medium while the magnetic recording medium is being heated using the probe.

6. The recording and reproducing method according to any one of Claims 1 to 5, wherein the format signal is recorded and/or detected by changing one of a magnetization direction and a magnetic anisotropy of the magnetic recording medium while the magnetic recording medium is being heated using the probe.

7. The recording and reproducing method according to any one of Claims 1 to 6, wherein a guard band is formed by changing one of a magnetization direction and a magnetic anisotropy of the magnetic recording medium while the magnetic recording medium is being heated using the probe.

8. The recording and reproducing method according to any one of Claims 1 to 7, wherein the data is recorded by oxidizing the magnetic recording medium while the magnetic recording medium is being heated using the probe.

9. The recording and reproducing method according to any one of Claims 1 to 8, wherein the format signal is recorded by oxidizing the magnetic recording medium while the magnetic recording medium is being heated using the probe.

10. The recording and reproducing method according to any one of Claims 1 to 9, wherein a guard band is formed by oxidizing the magnetic recording medium while the magnetic recording medium is being heated using the probe.

11. The recording and reproducing method according to any one of Claims 1 to 10, wherein a plurality of tracks of the magnetic recording medium are erased altogether using a plurality of probes.

12. A recording and reproducing method for a magnetic recording medium, comprising:
arranging a mask that is patterned according to data and/or a format signal on a surface of the magnetic recording medium; and
recording a signal on the magnetic recording medium by heating the magnetic recording medium through the mask or by irradiating the magnetic recording medium with light through the mask.

13. The recording and reproducing method according to Claim 12, wherein the data is recorded by changing a magnetic anisotropy of the magnetic recording medium through heating.

14. The recording and reproducing method according to any one of Claims 12 and 13, wherein the format signal is recorded by changing a magnetic anisotropy of the magnetic recording medium through heating.

15. The recording and reproducing method according to any one of Claims 12 to 14, wherein a guard band is further formed by changing a magnetic anisotropy of the magnetic recording medium through heating.

16. The recording and reproducing method according to any one of Claims 12 to 15, wherein the mask has regions that differ from one another in light transmittance according to the data and/or the format signal.

17. The recording and reproducing method according to any one of Claims 1 to 16, wherein the format signal includes a servo signal and/or address information.

18. The recording and reproducing method according to any one of Claims 1 to 17, wherein a recording surface of the magnetic recording medium has concaves and convexes, concaves and convexes formed by grooves, and/or concaves and convexes formed by pits.

19. The recording and reproducing method according to Claim 18, wherein the grooves and the pits formed on the recording surface are heated simultaneously.

20. The recording and reproducing method according to any one of Claims 1 to 19, wherein the data is recorded, reproduced, and/or erased only on surfaces of the convexes formed on the recording surface of the magnetic recording medium.

21. A recording and reproducing apparatus for a magnetic recording medium that records, reproduces, and erases data and/or a format signal on the magnetic recording medium, the apparatus comprising:
at least one probe array that includes a probe arranged to face the magnetic recording medium so as to scan the magnetic recording medium; and
a magnetic recording medium on which data and/or a format signal is recorded by changing one of a magnetization direction and a magnetic anisotropy of the magnetic recording medium,
wherein the probe includes a means for detecting a format signal on the magnetic recording medium, a means for recording data and/or a format signal on the magnetic recording medium, and a means for reproducing data on the magnetic recording medium.

22. The recording and reproducing apparatus according to Claim 21, wherein the probe includes a means for generating a magnetic field and/or a means for heating the magnetic recording medium on a tip thereof.

23. The recording and reproducing apparatus according to any one of Claims 21 and 22, wherein the probe scans the magnetic recording medium while being supported at a predetermined distance from a surface of the magnetic recording medium or while contacting the surface of the magnetic recording medium.

24. The recording and reproducing apparatus according to any one of Claims 21 to 23, comprising:
a plurality of probes.

25. A recording and reproducing apparatus for a magnetic recording medium that writes a signal to the magnetic recording medium by irradiating the magnetic recording medium through a mask with light that is applied from a light source and heating the magnetic recording medium according to data and/or a format signal, the apparatus comprising:
a magnetic recording medium on which data and/or a format signal is recorded by changing one of a magnetization direction and a magnetic anisotropy of the magnetic recording medium;
a mask that is patterned according to the data and/or the format signal and is arranged on a surface of the magnetic recording medium; and
a light source for irradiating the magnetic recording medium with light through the mask.

26. The recording and reproducing apparatus according to Claim 25, wherein the mask has a pit according to the data and/or the format signal.

27. The recording and reproducing apparatus according to Claim 25, wherein the mask has regions that differ from one another in light transmittance according to the data and/or the format signal.

28. The recording and reproducing apparatus according to any one of Claims 25 to 27, wherein the mask further has a region for forming a guard band that differs from other regions of the mask in light transmittance.

29. The recording and reproducing apparatus according to any one of Claims 25 to 28, wherein the light source is one of a gas laser and a YAG laser.

30. A magnetic recording medium comprising:
a substrate; and
a recording layer that is formed from a magnetic material,
wherein a format signal is recorded on the magnetic recording medium by changing one of a magnetization direction and a magnetic anisotropy of the magnetic recording medium.

31. The magnetic recording medium according to Claim 30, wherein a guard band is further formed on the magnetic recording medium by changing the magnetic anisotropy of the magnetic recording medium.

32. A magnetic recording medium, comprising:
a substrate; and
a recording layer that is formed from a magnetic material,
wherein a format signal is recorded on the magnetic recording medium using a pit formed with an oxidation film.

33. The magnetic recording medium according to Claim 32, wherein a guard band is further formed on the magnetic recording medium using an oxidation film.

34. The magnetic recording medium according to any one of Claims 30 to 33, wherein data is recorded on the magnetic recording medium by changing one of a magnetization direction and a magnetic anisotropy of the magnetic recording medium after a format signal is recorded on the magnetic recording medium.

35. The magnetic recording medium according to any one of Claims 30 to 33, wherein data is recorded on the magnetic recording medium by forming an oxidation film on the magnetic recording medium after a format signal is recorded on the magnetic recording medium.

36. The magnetic recording medium according to any one of Claims 30 to 35, wherein concaves and convexes, concaves and convexes corresponding to recording marks, concaves and convexes having a cycle smaller than a cycle of the recording marks, and/or concaves and convexes corresponding to domain walls of the recording marks, concaves and convexes formed by grooves, and concaves and convexes formed by pits are formed on a substrate surface and/or a recording layer surface of the magnetic recording medium.

37. The magnetic recording medium according to Claim 36, wherein data is recorded only on surfaces of the convexes formed on the magnetic recording medium.
